# EUROPÄISCHE PATENTSCHRIFT

(11) **EP 1 260 391 B1**
(45) Veröffentlichungstag und Bekanntmachung des Hinweises auf die Patenterteilung: **17.03.2004**
(21) Anmeldenummer: 02009527.9
(22) Anmeldetag: 26.04.2002
(51) Int. Cl.: B60H 1/00

(54) **Dezentrale und modulare Multifunktionsbaugruppe für Luftausströmer in Kraftfahrzeugen**
Decentral and modular multifunctional group for a vehicle air duct
Ensemble modulaire multifonctionnel excentré pour conduit de ventilation de véhicule

(30) Priorität: 03.05.2001 DE 10121904; 03.05.2001 DE 10121908
(43) Veröffentlichungstag der Anmeldung: 27.11.2002
(73) Patentinhaber: Bühler Motor GmbH, 90459 Nürnberg (DE)
(72) Erfinder: Schuhmann, Michael, 90491 Nürnberg (DE)

(56) Entgegenhaltungen:
- EP-A- 1 034 952
- DE-A- 19 954 000
- FR-A- 2 735 426

## Beschreibung

Die Erfindung betrifft eine Belüftungsvorrichtung für Fahrzeuge, mit einer Multifunktionsbaugruppe, von der das optische Design aller im Fahrzeuginnenraum sichtbaren Komponenten unabhängig ist, insbesondere in Verbindung mit einer Heizungsoder Klimaanlage, mit Luftströmungskanälen und mindestens einem Luftausströmer mit mindestens einer Luftrichtungssteuereinrichtung und / oder einer Luftmengensteuereinrichtung.

Eine derartige Belüftungsvorrichtung ist bereits aus der DE-OS 199 56 259 A 1 bekannt. Bei herkömmlichen Heizungs- bzw. Klimaanlagen sind Lüfter und Heizung zentral angeordnet, so dass der zentrale Lüfter bzw. die zentrale Heizung in Betrieb sein müssen, wenn nur an einer oder wenigen Luftausströmem ein (warmer) Luftstrom gewünscht wird. Lüfter und Heizung sind also für die meisten Betriebssituationen überdimensioniert. Die motorische Verstellung von den Luftmengensteuereinrichtungen und den Luftrichtungssteuereinrichtungen ist, wenn überhaupt vorhanden, spezifisch an die Belüftungsvorrichtung angepasst und in diese integriert. Dies erschwert unter anderem die Standardisierung.

Aus der DE-OS 199 54 000 A1 ist eine Heizungs- und Lüftungsanlage für Fahrzeuge bekannt, bei der wenigstens ein Heizelement unmittelbar in wenigstens einem Fahrzeugscheiben des Fahrzeuges zugeordneten Luftauslass angeordnet sind. Dies dient bei sehr tiefen Temperaturen für eine schnellere Enteisung der Scheiben. Als Heizelemente sind hierzu PTC-Elemente vorgesehen. Das Heizelement ist nicht in Zusammenhang mit Antrieben für Luftausströmer beschrieben.

Die DE-OS 197 52 676 A1 zeigt eine Zusatzheizeinrichtung für den Fußraum, wobei PTC-Elemente von einem Mikrocomputer gesteuert werden.

Die DE-PS 42 13 510 C1 beschreibt das Luftausströmgitter in Form eines PTC-Heizelements, wobei dieses Gitter starr oder zur Änderung der Luftströmungsrichtung einstellbar ausgeführt sein kann. Da das Luftausströmgitter zum im Fahrzeuginnenraum sichtbaren Bereich gehört, können diese nicht unabhängig vom jeweiligen Design, dem.

Fahrzeugtyp oder der Anordnung des Luftausströmers als Standardbaugruppe konzipiert werden.

Die DE-OS 199 10 774 A1 zeigt eine Fahrzeug-Frischluftdüseneinrichtung mit einem schachtartigen Düsengehäuse, das einen Frontrahmen und Vertikal- und Horizontallamellen aufweist, wobei Antriebe, bestehend aus je einem Elektromotor und einem Untersetzungsgetriebe an dem schachtartigen Düsengehäuse montiert sind. Durch diesen Aufbau ist für jede in der Größe oder der Form geänderte Frischluftdüseneinrichtung (Luftausströmer) eine spezielle Antriebskonstruktion erforderlich. Weiterhin ist dieser Aufbau ungeeignet, wenn Antriebe und der Luftausströmer von unterschiedlichen Lieferanten hergestellt werden.

Aus der FR 2 735 426 ist eine zentrale modular aufgebaute Heizungs- Lüftungs- und/oder Klimaanlage bekannt. Diese Anlage ist aufgrund ihres modularen Aufbaus in Verschiedenen Fahrzeugmodellen einsetzbar, sie weist aber nur ein zentrales Gebläse und eine zentrale Heizeinrichtung auf.

In der EP 1 034 952 A1 wird ein vormontiertes Modul einer Heizungs- und/oder Klimaanlage vorgeschlagen, hierdurch wird eine besonders kompakte und leicht zu montierende zentrale Einheit ermöglicht.

Aufgabe der vorliegenden Erfindung ist es, eine Belüftungsvorrichtung für ein Kraftfahrzeug darzustellen, die mehrere der oben genannten Funktionen separat für mindestens einen Luftausströmer, also unabhängig von weiteren Luftausströmern, zur Verfügung stellt. Dabei sollen die Vorrichtungen zur Ausführung der Funktionen vorzugsweise nicht in den jeweiligen Luftausströmer integriert sein.

Diese Aufgabe wird erfindungsgemäß dadurch gelöst, dass die Multifunktionsbaugruppe aus mindestens einem Aktuator zur Verstellung der Luftrichtungssteuereinrichtung und/oder einem Aktuator zur Verstellung der Luftmengensteuereinhchtung und/oder einer Heizvorrichtung und/oder einer Lüftervorrichtung besteht, die Multifunktionsbaugruppe universell einsetzbar ist, insbesondere für unterschiedliche Luftausströmer zumindest innerhalb eines Fahrzeuges sowie verschiedener Fahrzeuge und dass die Multifunktionsbaugruppe dezentral ist. Kern der Erfindung ist der flexible Einsatz der Multifunktionsbaugruppe für unterschiedliche Luftausströmer eines Fahrzeugs bzw. für Luftausströmer unterschiedlicher Fahrzeuge, wobei nicht notwendigerweise alle Komponenten der Multifunktionsbaugruppe vorhanden sein müssen. So kann ggf. auf eine Heizvorrichtung bei Luftausströmern, die nicht für die Anströmung der Scheiben dienen verzichtet werden. Bei Luftausströmem für die Windschutzscheibe sind in der Regel keine Aktuatoren für die Luftrichtungssteuerung erforderlich. Lüftervorrichtungen sind insbesondere dann sinnvoll, wenn dezentrale Klimaanlagen, z.B. im Dachbereich oder im Fond eines Fahrzeugs vorgesehen sind, oder wenn aus Bauraumgründen kein zentrales Gebläse verwendbar ist oder ein kleineres Zentralgebläse vorhanden ist, das nur für niedrige Leistungsbereiche ausgelegt ist. Da die Gestaltung des Fahrzeuginnenraums, insbesondere des Armaturenbrettes sich oft weniger an den technischen oder wirtschaftlichen Notwendigkeiten als an modischen Einflüssen oder der jeweiligen Firmenphilosopie orientiert, sind Standardisierungen der oben genannten Komponenten nur durch die Unabhängigkeit der Multifunktionsbaugruppe vom Design der im Fahrzeuginnenraum sichtbaren Komponenten möglich. Auch wird vorgeschlagen, die Multifunktionsbaugruppe dezentral anzuordnen. Vorzugsweise wird für jeden Luftausströmer eine eigene Multifunktionsbaugruppe verwendet. Lüfter und Heizung können dadurch entsprechend den Bedürfnissen des jeweiligen Luftausströmers gesteuert werden. Außerdem sind die Wegstrecken für den warmen Luftstrom sowie für die Übertragung der mechanischen Energie der Aktuatoren zur Luftrichtungssteuereinrichtung kurz.

Weiterbildungen der Erfindung werden in den Unteransprüchen dargestellt.

Die Luftmengensteuereinrichtung kann selbst als zusätzliche Baueinheit Bestandteil der Multifunktionsbaugruppe sein, da diese nicht unmittelbar am Ausgang des Luftausströmers angeordnet sein muss. In Sonderfällen ist gleiches auch für die Luftrichtungssteuereinrichtung denkbar.

Der Aufbau der Multifunktionsbaugruppe ist vorzugsweise modular. Die Multifunktionsbaugruppe kann also z.B. aus einem Heizmodul, einem Luftmengensteuermodul, einem Aktuatormodul zum Luftmengensteuermodul, einem Lüftermodul und einem Aktuatormodul zur Luftrichtungssteuereinrichtung bestehen. Werden zwei Richtungen der Luftrichtungssteuereinrichtung verstellt, so bieten sich zwei identische Aktuatormodule an. Sämtliche Aktuatormodule können jeweils aus einem Motor oder aus einer Motor-Getriebe-Kombination bestehen. Einzelne Aktuatormodule können auch zu einem Gesamtmodul z.B. in Form eines Mehrwellenmotors zusammengefasst werden. Vorteil des modularen Aufbaues ist, dass je nach Ausrüstungsgrad des Fahrzeuges bzw. des jeweiligen Luftausströmers nur die jeweils erforderlichen Funktionsmodule eingebaut und zur Verfügung gestellt werden. Dies führt zur Einsparung von Gewicht und Kosten in allen nicht voll ausgerüsteten Modulen. Außerdem wird ein evtl. späterer Service der Einheit im Falle einer Wartung oder Erweiterung erleichtert.

Wird die Heizvorrichtung in die Luftmengensteuereinrichtung integriert, so muss die Heizvorrichtung speziell an die Luftmengensteuervorrichtung angepasst sein; die Bildung eines gemeinsamen Moduls ist also sinnvoll.

Die Heizvorrichtung kann auch in die Luftmengensteuerungsklappe integriert sein. Dies hat den Vorteil, dass räumlich keine separate Vorrichtung für die Heizfunktion erforderlich ist und somit auch eine verringerte Baulänge realisiert wird. Diese integrierte Heizvorrichtung kann über flexible elektrische Leitungen und / oder schleifende Kontakte versorgt werden, welche die Relativbewegung zwischen der beweglichen Heizvorrichtung und feststehenden elektrischen Anschlüssen ausgleichen.

Für die Luftmengensteuereinrichtung können verschiedene Prinzipien zum Einsatz kommen wie z.B. eine einseitig oder ungefähr mittig gelagerte Klappe, eine Jalousieklappe, eine Visierklappe oder ein Segmentverschluss aus zwei gegensinnig betreibbaren zylinderringsegmentförmigen Visieren.

Es ist möglich, die Heizvorrichtung als Haupt- oder Zusatzheizung einzusetzen. Bei Einsatz als Hauptheizung kann die zentrale Heizungsanlage entfallen, was zu Gewichts-, Volumenund Kosteneinsparungen führt. Darüber hinaus werden nur die tatsächlich benötigten Luftausströmer beheizt, so dass die Wärme nur punktuell wo gewünscht erzeugt bzw. eingesetzt wird. Bei Einsatz als Zusatzheizung bleiben die Vorteile bei Kaltstart erhalten, wobei bei betriebswarmem Verbrennungsmotor dessen Abwärme zur Heizung des Innenraumes herangezogen wird.

Die Heizvorrichtung kann zumindest ein Heizelement aufweisen, welches starr im Luftstrom angeordnet ist. Vorteil hierbei sind der einfache Aufbau und der Entfall beweglicher Teile wie z.B. beweglicher Stromzuführungen. Dies ist im Hinblick auf die Robustheit und Lebensdauer grundsätzlich vorteilhaft.

Die Heizvorrichtung kann, zur Erhöhung der Heizleistung, zusätzliche Einrichtungen zur Vergrößerung der Wärme abgebenden Oberfläche aufweisen, insbesondere wärmeleitende Strukturen in Lamellen-, Wellen- oder Wabenform, welche der Heizvorrichtung unmittelbar zugeordnet sind.

Die Heizvorrichtung ist vorzugsweise als elektrische Widerstandsheizung ausgeführt, um die Vorteile der schnellen und vom Verbrennungsmotor unabhängigen Heizwirkung voll entfalten zu können. Zur Erhöhung der Funktionssicherheit ist hierbei ein Schutzelement vorzusehen, wobei insbesondere ein PTC-Element beides, die Heiz- und die Schutzfunktion, wahrnehmen kann.

Es ist möglich, die Lüftervorrichtung als Haupt- oder Zusatzlüfter einzusetzen. Bei Einsatz als Hauptlüfter kann die zentrale Lüfteranlage entfallen, was zu Gewichts-, Volumen- und Kosteneinsparungen führt. Der Einsatz als Zusatzlüfter ist sinnvoll, wenn nicht alle Luftausströmer mit einer separaten Lüftervorrichtung ausgestattet ist.

Als Lüftervorrichtung kann ein Axial- oder ein Radiallüfter zum Einsatz kommen. Bei einem Axiallüfter sind Lufteintritts- und Luftaustrittsrichtung identisch; bei einem Radiallüfter bilden Lufteintritts- und Luftaustrittsrichtung einen rechten Winkel. Je nach Erfordernissen kann der geeignete Lüftertyp gewählt werden.

Dient der / die Lüftervorrichtungen als Hauptlüfter, so kann die Luftmenge einer Luftaustrittsdüse effizient mit der jeweiligen Lüftervorrichtung gemeinsam mit der Luftmengensteuereinrichtung gesteuert werden. Wird kein Luftstrom gewünscht, so ist die Luftmengensteuereinrichtung geschlossen. Ist die gewünschte Luftmenge sehr klein, so genügt bei abgeschalteter Lüftervorrichtung ein Öffnen der Luftmengensteuervorrichtung, um den Luftstrom bereitzustellen, falls das sich das Fahrzeug in Bewegung befindet und durch den Fahrtwind eine Luftströmung erzeugt wird. Ist die gewünschte Luftmenge größer, so wird der Lüfter bei vollständig geöffneter Luftmengensteuerung hinzugeschaltet. Damit erfolgt im Gegensatz zu Herkömmlichen Luftmengensteuereinrichtungen keine Luftdrosselung mehr, was den Wirkungsgrad erhöht.

Sind die Aktuatoren zur Luftrichtungssteuereinrichtung im Windschatten des Axiallüfter-Antriebsmotors angeordnet, so ergibt sich ein kompakter Aufbau mit einem geringen Strömungswiderstand.

Es ist vorgesehen, dass der/die Aktuator/en zur Luftmengensteuereinrichtung mit unterschiedlichen Arten von Luftmengensteuereinrichtungen mechanisch koppelbar ist/sind. Hierdurch ist auch innerhalb der Multifunktionsbaugruppe (207) eine gewisse Universalität gegeben.

Als Aktuator bietet sich ein Schrittmotor an, insbesondere wenn Funktionen zur Positionsbestimmung z.B. Memory-Funktion, Anfahren voreingestellter Positionen für Enteisung, etc. gewünscht sind. Damit kann auf Wegmesssysteme wie Potentiometer verzichtet werden.

Es ist vorteilhaft einen kompakten Antrieb für eine oder mehrere Funktionen, insbesondere der Luftrichtungssteuereinrichtung und/oder der Luftmengensteuereinrichtung vorzusehen, weil hierdurch die Handhabung wesentlich erleichtert ist und bei Integration mehrerer Funktionen in einem Antrieb auch die Teileanzahl und somit der Montageaufwand, das Gewicht und die Baugröße geringer sind.

Der modulare Aufbau wird durch die Verwendung gleichartiger und standardisierter Schnittstellen sowohl zu außerhalb mit der Multifunktionsbaugruppe verbundenen Bauteilen als auch innerhalb der Multifunktionsbaugruppe ergänzt. Dies stellt eine mechanische und elektrische Kompatibilität der Einzelmodule sicher. Damit können z.B. die Aktuatoren mit verschiedenen Arten von Luftrichtungssteuereinrichtungen gekoppelt werden, ohne dass eine spezielle Anpassung erforderlich ist. Vergleichbares gilt für den Aktuator zur Verstellung der Luftmengensteuereinrichtung.

Als mechanische Schnittstelle eignen sich insbesondere Zahneingriffe von zumindest zwei Kron-, Kegel-, Stim- oder Hohlrädem des elektrischen Antriebs, bzw. des/der Aktuators/en, mit entsprechenden Gegenrädem oder Zahnstangen der Luftrichtungssteuereinrichtung bzw. Luftmengensteuereinrichtung.

Eine besonders große Designfreiheit für die Luftausströmer kann durch die Konzentration der mechanischen Schnittstelle für mehrere Funktionen, wie aufeinander rechtwinklig stehende Luftrichtungssteuereinrichtungen und ggf. der Luftmengensteuereinrichtung, auf einen möglichst geringen Raumbereich erreicht werden. Hierzu werden kaskadenartig angeordnete Ritzel auf dem antriebsseitigen Teil der mechanischen Schnittstelle vorgeschlagen, die mit Zahnrädern oder Zahnradsegmenten der zu verstellenden Einheiten in Eingriff bringbar sind.

Um zu verhindern, dass sich die mechanische Schnittstelle löst, Getriebemittel außer Eingriff geraten oder dass sich ein übermäßigen Getriebe- oder Kupplungsspiels bildet, ist zumindest eine Schnappverbindung vorgesehen, die die Teile der zusammenwirkenden mechanischen Schnittstelle in ihrer optimalen Position halten.

Die Multifunktionsbaugruppe ist vorzugsweise - in Luftströmungsrichtung gesehen - unmittelbar vor dem Luftausströmer angeordnet und kann einen Kanalabschnitt zwischen der Heizungs- bzw. Klimaanlage und dem Luftausströmer bilden. Die Multifunktionsbaugruppe ist also im nicht sichtbaren Bereich des Fahrzeugs, so dass auf optische Designaspekte keine Rücksicht genommen werden braucht. Somit kann die selbe Multifunktionsbaugruppe bei verschiedenen Luftausströmern innerhalb eines Fahrzeugs und auch bei verschiedenen Fahrzeugtypen zum Einsatz kommen.

Die Aktuatoren können auch außerhalb des Luftstroms angeordnet werden. Sie sind dann Staub und Schmutz weniger ausgesetzt und sind zumindest bei Verwendung einer Zentralheizung thermisch weniger belastet.

Mindestens zwei Aktuatoren können, unabhängig von ihrer zu erfüllenden Aufgabe, zu einem gemeinsamen Modul, insbesondere in Form eines Mehrwellenmotors (1), zusammengefasst sind. Hierdurch lässt sich ein besonders kompakter elektrischer Antrieb herstellen, der Statorteile für mehrere Rotoren und damit Ausgangswellen nutzt.

Es ist vorgesehen diesen Mehrwellenmotor zum Antrieb der Luftrichtungssteuereinrichtung oder zum Antrieb der Luftmengensteuereinrichtung und der Luftrichtungssteuereinrichtung einzusetzen, wobei der Mehrwellenmotor zwei oder drei Permanentmagnetrotoren und zumindest zwei bewickelte Statorteile aufweist.

Der Mehrwellenmotor ist am einfachsten herzustellen, wenn alle Drehachsen der Permanentmagnetrotoren parallel zueinander und die Permanentmagnetrotoren mit den Statorteilen in einer Ebene angeordnet sind, wobei die Drehachsen rechtwinklig zu dieser Ebene ausgerichtet sind.

Aus geometrischen Erfordernissen heraus kann es günstiger sein, wenn die Drehachse zumindest eines Permanentmagnetrotors im wesentlichen rechtwinklig zu den Drehachsen der übrigen Permanentmagnetrotoren angeordnet ist, insbesondere, wenn die Luftrichtungssteuereinrichtung für die beiden zueinenader rechtwinkligen Verstellrichtungen an den Mehrwellenmotor anzukoppeln sind.

Für die bereits genannte Schnittstelle mit geringer räumlicher Ausdehnung und kaskadenartig angeordneten Ritzeln sind die Drehachsen bei Verwendung eines Mehrwellenmotors koaxial zueinander angeordnet.

Zweckmäßigerweise ist zumindest einem Permanentmagnetrotor des Mehrwellenmotors, des elektrischen Antriebs bzw. eines Aktuatormoduls ein Untersetzungsgetriebe zugeordnet, insbesondere ein nichtselbsthemmendes Untersetzungsgetriebe in Form zumindest einer Stimrad- oder Planetengetriebestufe. Dies ist nötig, um die erforderliche Verstellkraft zu erzeugen und um die Luftrichtungs- und Luftmengensteuereinrichtung notfalls auch von Hand verstellen zu können. Bei Verwendung eines selbsthemmenden Getriebes, z. B. eines Schneckengetriebes müsste eine aufwändige Rutschkupplung integriert sein, um eine Entkopplung des Untersetzungsgetriebes von den Steuereinrichtungen zu erreichen.

Nachteilig wäre hierbei, dass bei einer Memoryversion ggf. die Positionsinformation verloren gehen könnte.

Zum Schutz der einzelnen Elektromotore bzw. des Mehrwellenmotors, ist ein Gehäuse vorgesehen. Falls auf ein Gehäuse verzichtet werden kann, ist zumindest ein Träger vorgesehen, der die genannten Elemente zu einer Baugruppe zusammenfasst, insbesondere zu einem Antriebsmodul. Zumindest ein Teil des Untersetzungsgetriebes ist ebenso auf dem Täger bzw. in dem Gehäuse angeordnet.

Der elektrische Antrieb kann auf zumindest eine oder zwei aufeinanderfolgende Seitenfläche/n eines Luftströmungskanals montiert sein, wobei dieser einen im wesentlichen rechteckigen Querschnitt aufweist. Bei der Montage auf zwei aufeinanderfolgende Seitenflächen ist, wie oben erwähnt eine Drehachse vorzugsweise rechtwinklig zu den übrigen Drehachsen ausgerichtet, um eine besonders einfache Anpassung an die Einbauverhältnisse zu erreichen.

Eine Ausführungsform der vorliegenden Erfindung weist zumindest eine Drehachse des elektrischen Antriebs auf, die parallel zur Luftströmungsrichtung verläuft. Bei dieser Ausführung kann der elektrische Antrieb innerhalb oder außerhalb des Luftströmungskanals an dessen Wandung angeordnet sein.

Die größtmögliche Gestaltungsfreiheit für das äußere Design, das gilt in diesem Fall auch für die Gestaltung des Luftströmungskanals, kann erhalten werden, wenn der elektrische Antrieb innerhalb des Luftströmungskanals angeordnet ist und allseitig luftumströmbar ist. Der Strömungsquerschnitt wird dadurch nicht verringert, wenn der Bauraum an der Außenwand des Luftströmungskanals den der elektrische Antrieb bei einer anderer Anordnung einnehmen würde für die Vergrößerung des Luftströmungskanals genutzt wird. Um den Antrieb innerhalb des Luftströmungskanals zu halten sind Streben vorgesehen. bei unterschiedlichen Strömungskanalkonturen kann es genügen lediglich die Streben, die relativ einfach aufgebaut sein können, auszutauschen, um den elektrischen Antrieb an die veränderten geometrischen Gegebenheiten anzupassen. In gewissen Grenzen ist die Geometrie des Strömungskanal auch ohne Anpassung des elektrischen Antriebs möglich.

Zur sicheren Lagerung des elektrischen Antriebs im Bereich der der mechanischen Schnittstelle ist soweit möglich vorgesehen, dass der elektrische Antrieb, insbesondere das Ende einer seiner Antriebswellen, in einer zentralen Achse der Luftrichtungssteuereinrichtung gelagert ist.

In Weiterbildung dieser Ausführungsform ist ein mit einer Verzahnung versehenes Schieberohr vorgesehen, das um die zentrale Achse verschiebbar gelagert ist, wobei das Schieberohr Mitnehmer für Luftführungsscheiben und/oder Luftführungslamellen aufweist.

Zumindest eine Drehachse des elektrischen Antriebs ist rechtwinklig zur Strömungsrichtung und rechtwinklig zur Luftrichtungssteuereinrichtung (rechts/links) angeordnet. Ist ein Zahnradsegment an einer äußeren Luftführungslamelle angeordnet und stimmt eine Drehchse des elektrischen Antriebs mit der Drehachse der Luftrichtungssteuereinrichtung (auf/ab) überein, dann kann der elektrische Antrieb wie bereits erwähnt mit koaxialen Ausgangswellen und kaskadenartigen Ritzeln ausgeführt sein, wobei deren Ausrichtung rechtwinklig zu der vorgenannten Ausführungsform ist.

Da alle Komponenten der Multifunktionsbaugruppe räumlich kompakt angeordnet sind, ist es günstig, eine Intelligenz in Form eines Elektronikmoduls an die Multifunktionsbaugruppe anzuschließen oder in diese zu integrieren. Dieses Elektronikmodul stellt dann die Schnittstelle für Information und Energie zwischen dem Fahrzeug und den einzelnen Komponenten der Multifunktionsbaugruppe dar. Die Kommunikation zwischen Elektronikmodul und Fahrzeug erfolgt vorzugsweise über einen Datenbus; die Leistungsversorgung über eine erhöhte Bordnetzspannung, vorzugsweise 42V. Das Elektronikmodul steuert dann die einzelnen Komponenten der Multifunktionsbaugruppe direkt an. Damit benötigt nicht jede Komponente für sich eine Busschnittstelle. Das Elektronikmodul kann außerdem noch eine geeignete Verbindung zu den (manuellen) Bedieneinheiten der Komponenten aufweisen. Damit stellt das Elektronikmodul zusätzlich die Schnittstelle für Information von Energie und Information von den Bedieneinheiten (entspricht Fahrerwunsch) zum Bordcomputer dar.

Die Multifunktionsbaugruppe kann zusätzlich ein Element zur Erzeugung und/oder Weiterleitung von Licht enthalten. Damit können Bedien- oder Anzeigeelemente für den Luftausströmer oder für andere Funktionen beleuchtet werden.

Die Multifunktionsbaugruppe kann zusätzlich Weiterleitungsmittel für Informationen und für Energie aufweisen. Die Multifunktionsbaugruppe kann dadurch gut in eine moderne Fahrzeugarchitektur z.B. in Form eines Datenbusses mit Ringstruktur, integriert werden. Um die Anzahl der elektrischen Leitungen zu minimieren, bietet sich eine Busansteuerung einzelner oder aller Komponenten an. Eine Leistungsversorgung mit erhöhter Bordnetzspannung, insbesondere 42V, bietet sich insbesondere für die leistungsstarke elektrische Heizvorrichtung an, da hierbei die Leiterquerschnitte reduziert werden.

Ausführungsbeispiele der Erfindung werden nachfolgend anhand der Zeichnung dargestellt. Es zeigen:
- Fig. 1: eine 3D-Prinzipdarstellung einer Belüftungsvorrichtung,
- Fig. 2: eine schematische Darstellung eines Teiles der Belüftungsvorrichtung,
- Fig. 3: eine 3D-Prinzipdarstellung einer weiteren Belüftungsvorrichtung eines montierten elektrischen Antriebs in einer ersten Ausführungsform,
- Fig. 4: eine 3D-Prinzipdarstellung der ersten Ausführungsform des elektrischen Antriebs.
- Fig 5: eine 3D-Prinzipdarstellung einer weiteren Belüftungsvorrichtung eines montierten elektrischen Antriebs in einer zweiten Ausführungsform,
- Fig. 6: eine 3D-Prinzipdarstellung der zweiten Ausführungsform des elektrischen Antriebs,
- Fig. 7a und 7b: eine erste Form eines Mehrwellenmotors für die erste Ausführungsform des elektrischem Antriebs,
- Fig. 8a und 8b: eine erste Variante eines Mehrwellenmotors für die erste Ausführungsform des elektrischen Antriebs,
- Fig. 9: eine erste Form eines Mehrwellenmotors für eine zweite Ausführungsform des elektrischen Antriebs,
- Fig. 10: eine Variante eines Mehrwellenmotors für die zweite Ausführungsform des elektrischen Antriebs,
- Fig. 11a und 11b: eine Schnittdarstellung der Variante aus Fig. 10,
- Fig. 12a, 12b, 12c: einen Permanentmagnetrotor,
- Fig. 13a: eine Belüftungsvorrichtung mit einer dritten Ausführungsform des elektrischen Antriebs in einer ersten Stellung,
- Fig. 13b: die Belüftungsvorrichtung mit der dritten Ausführungsform des elektrischen Antriebes in einer zweiten Stellung und gedrosselter Luftmengensteuereinrichtung,
- Fig. 13c: die Belüftungsvorrichtung mit der dritten Ausführungsform des elektrischen Antriebes in einer dritten Stellung,
- Fig. 13d: die Belüftungsvorrichtung mit der dritten Ausführungsform des elektrischen Antriebes in einer vierten Stellung,
- Fig. 13e: die Belüftungsvorrichtung mit der dritten Ausführungsform des elektrischen Antriebes in einer fünften Stellung,
- Fig. 13f: die Belüftungsvorrichtung mit der dritten Ausführungsform des elektrischen Antriebes in einer sechsten Stellung,
- Fig. 14a: eine Belüftungsvorrichtung mit einer vierten Ausführungsform des elektrischen Antriebs und der mechanischen Schnittstelle,
- Fig. 14b: die Belüftungsvorrichtung aus Fig. 14a in einer Extremstellung,
- Fig. 15: eine Prinzipdarstellung einer Belüftungsvorrichtung mit einer Variante der vierten Ausführungsform des elektrischen Antriebes und der mechanischen Schnittstelle,
- Fig. 16a: eine Belüftungsvorrichtung mit einer fünften Ausführungsform des elektrischen Antriebes und der mechanischen Schnittstelle,
- Fig. 16b: eine Ansicht AA' der Belüftungsvorrichtung aus Fig. 16a,
- Fig. 17: eine Belüftungsvorrichtung 51 mit einer sechsten Ausführungsform des elektrischen Antriebes und der mechanischen Schnittstelle,
- Fig. 18: eine Variante zu Fig. 15,
- Fig. 19a und 19b: schematische Darstellungen einer Einrichtung zur Steuerung der Luftmenge mit integriertem Heizelement,
- Fig. 20a und 20b: schematische Darstellungen einer Einrichtung zur Steuerung der Luftmenge mit integriertem Heizelement und wärmeleitenden Strukturen und
- Fig. 21a bis 21d: verschiedene Varianten von Luftmengensteuereinrichtungen.

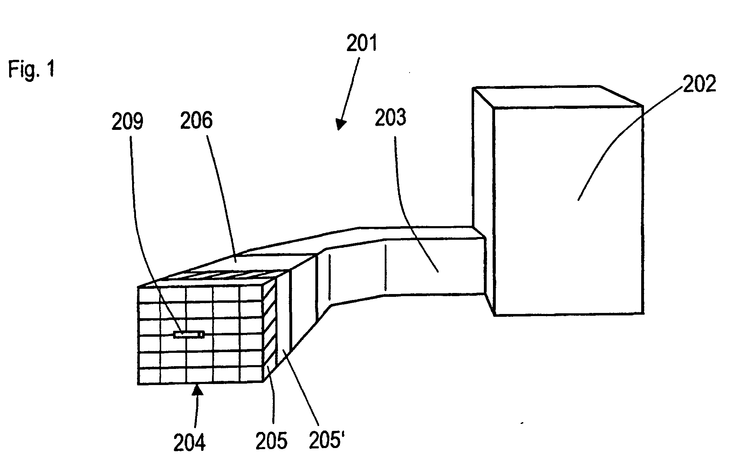

Fig. 1 zeigt eine 3D-Prinzipdarstellung einer Belüftungsvorrichtung mit einer Belüftungsvorrichtung 201 für Fahrzeuge, in Verbindung mit einer Heizungs- oder Klimaanlage 202, mit Luftströmungskanälen 203 und einem Luftausströmer 204 mit einer Einrichtung zur Steuerung der Luftrichtung 205, 205' und zur Luftmengensteuerung 206.

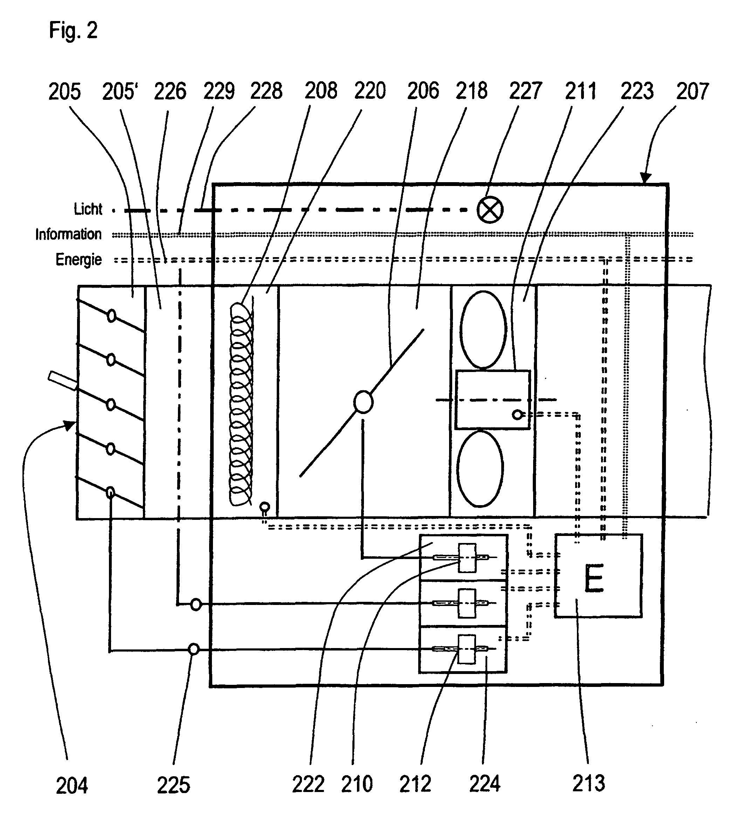

Fig. 2 zeigt eine schematische Darstellung eines Teiles der Belüftungsvorrichtung mit dem Luftausströmer 204, der Luftrichtungssteuereinrichtung 205, 205', der Luftmengensteuereinrichtung 206, einer Multifunktionsbaugruppe 207, einer Heizvorrichtung 208, einem Aktuator zur Verstellung der Luftmengensteuereinrichtung 210,einer Lüftervorrichtung 211, einem Aktuator zur Luftrichtungssteuereinrichtung 212, einem Elektronikmodul 213, einem Luftmengensteuerungsmodul 218, einem Heizmodul 220, einem Aktuatormodul zur Verstellung der Luftmengensteuereinrichtung 222, einem Lüftermodul 223, einem Aktuatormodul zur Luftrichtungssteuereinrichtung 224, einer einfachen / universellen mechanische Schnittstelle 225, einem Element zur Erzeugung von Licht 227, einem Weiterleitungsmittel für Licht 228, einem Weiterleitungsmittel für Informationen 229 und einem Weiterleitungsmittel für Energie 226. Gut erkenntlich ist die Zusammenfassung vieler Funktionen zu der Multifunktionsbaugruppe. Auf Grund des modularen Aufbaus können einzelne Funktionen auch weggelassen werden, ohne dass das Gesamtkonzept geändert werden muss. Dank einfacher Schnittstellen kann die Anpassung der Multifunktionsbaugruppe an die Umgebung (insbesondere Luftausströmer, Luftkanäle, Weiterleitungsmittel für Energie und Information) auf ein Minimum beschränkt werden. Da sich die Multifunktionsbaugruppe im nicht sichtbaren Bereich des Fahrzeugs befindet, müssen optische Designaspekte nicht berücksichtigt werden, was den Einsatz auch in verschiedenen Fahrzeugtypen ohne Anpassungen ermöglicht.

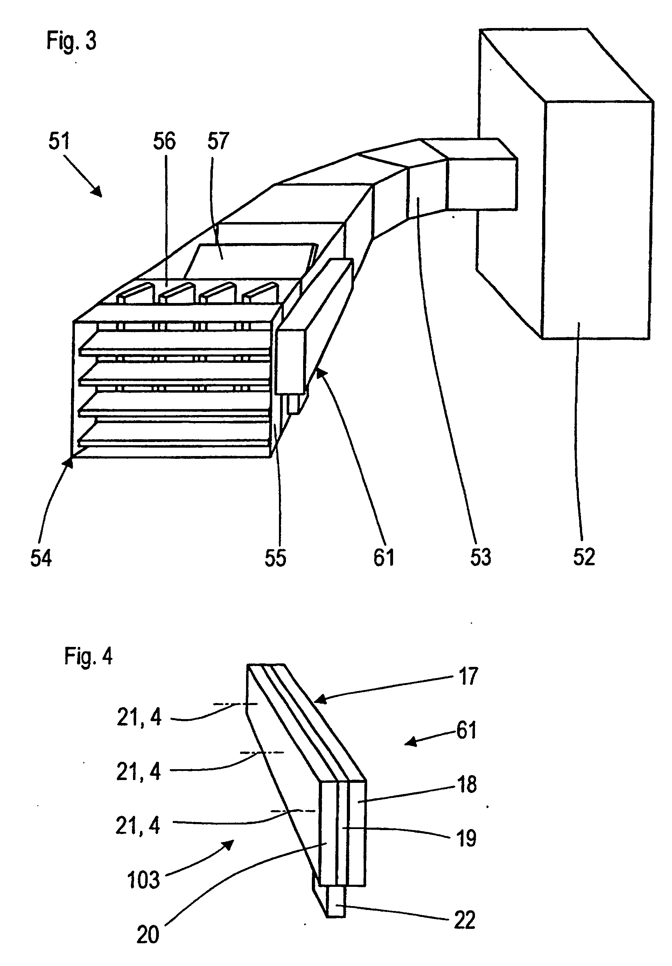

Fig. 3 zeigt eine 3D-Prinzipdarstellung einer weiteren Belüftungsvorrichtung 51, mit einem daran montierten elektrischen Antrieb 61 in einer ersten Ausführungsform. Dieser Antrieb ist flach ausgeführt, weist mehrere Ausgangswellen (nicht dargestellt) auf, die mit den zu verstellenden Luftrichtungs- und Luftmengensteuereinrichtungen 55, 56, 57 gekoppelt sind. Da zur Verstellung der Luftrichtungs- und/oder der Luftmengensteuereinrichtungen 55, 56, 57 ggf. nur geringe Momente auftreten, kann auf Untersetzungsgetriebe durchaus verzichtet werden oder ein geringes Untersetzungsverhältnis gewählt werden. Bei Verwendung von Seltenerdmagneten für Rotoren von Elektromotoren, insbesondere bürstenlosen Gleichstrommotoren oder Schrittmotoren, kann das dadurch wirkende erhöhte Rastmoment als Haltemoment für die Luftrichtungs- und/oder Luftmengenregeleinrichtungen dienen. Bei hohen Anforderungen an die Vibrationsfestigkeit sind jedoch zusätzliche Dämpfungsmaßnahmen erforderlich. Dies kann erheblich höhere Verstellmomente zur Folge haben. In diesem Fall sind entsprechend angepasste Untersetzungsgetriebe notwendig. Falls auf Untersetzungsgetriebe verzichtet werden kann, können die Drehachsen 4 von Rotoren, insbesondere Permanentmagnetrotoren des elektrischen Antriebs direkt als Ausgangswellen 21 dienen. Um Achsabstände auszugleichen können Zwischenräder verwendet werden.

Fig. 4 zeigt eine 3D-Prinzipdarstellung der ersten Ausführungsform des elektrischen Antriebs 61, mit den angedeuteten Ausgangswellen 21 bzw. Drehachsen 4. Der elektrische Antrieb 61 ist in einem Gehäuse 17 untergebracht, das im vorliegenden Beispiel aus einem Motorgehäuseteil 18, einem Getriebegehäuseteil 20 und einer Zwischenplatte 19 besteht, wobei die Zwischenplatte einen Motorraum von einem Getrieberaum trennt. Die Zwischenplatte dient als Träger für den oder die Elektromotoren, sie ist darüberhinaus mit einem Stecker 22 versehen, der mit dem Gegenstecker eines Kabelbaums oder BUS-Systems verbindbar ist. Da im vorliegenden Beispiel die Ausgangswellen 21 parallel aus dem elektrischen Antrieb 61 austreten und zumindest eine anzutreibende Achse rechtwinklig zu der zugeordneten Antiebsachse angeordnet ist, müssen die anzutreibenden Luftrichtungssteuereinrichtungen, die hier in Form von zwei rechtwinklig aufeinanderstehenden Jalousieneinheiten mit parallelen Luftführungslamellen ausgeführt sind, getrieblich daran angepasst sein. Dies kann durch einen Spindeltrieb mit vorzugsweise mit einer nicht selbsthemmenden Steigung oder durch Kronräder realisiert sein.

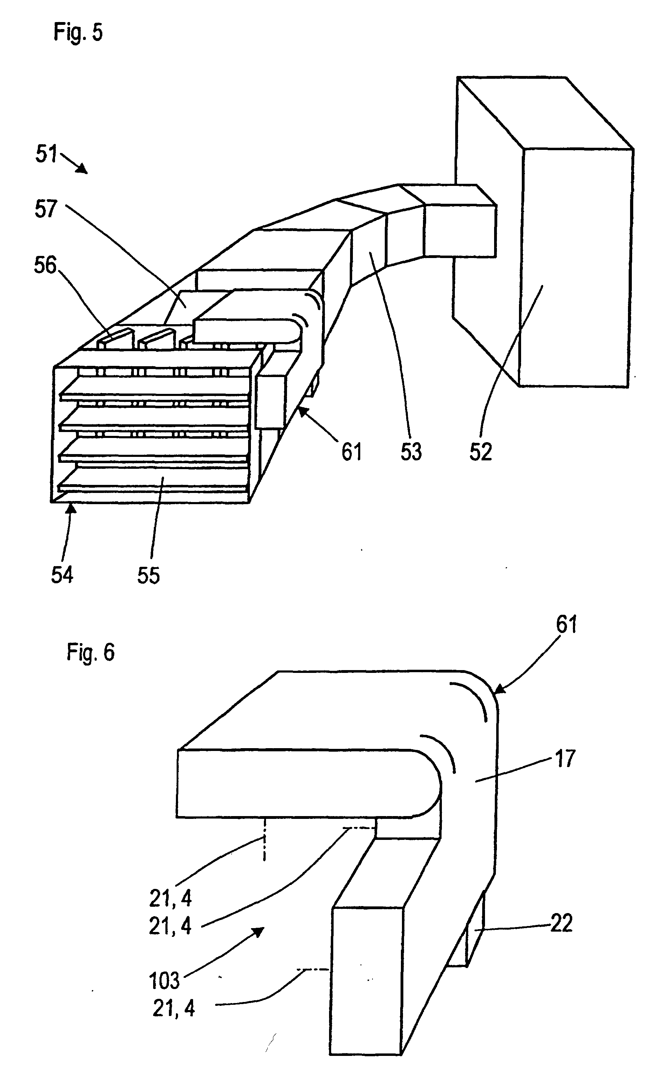

Fig. 5 zeigt eine 3D-Prinzipdarstellung einer weiteren Belüftungseinrichtung eines montierten elektrischen Antriebs in einer zweiten Ausführungsform, bei der auf ein Getriebe völlig verzichtet werden kann. Hier ist ein elektrischer Antrieb 61 gezeigt, bei dem zumindest zwei Ausgangswellen rechtwinklig zueinander angeordnet sind (verdeckt). Der elektrische Antrieb kann von Anfang an eine Rechtwinlige Form aufweisen oder erst vor der Montage an die Belüftungsvorrichtung abgewinkelt werden. Es ist denkbar, insbesondere wenn ohnehin ein Untersetzungsgetriebe notwendig ist, ein Winkelgetriebe innerhalb des Gehäusese 17 einzusetzen um die winklig angeordnete Ausgangswelle antreiben zu können, oder dass ein Mehrwellenmotor verwendet wird, der bereits abgewinkelt oder abwinkelbar ist. Mehrwellenmotoren weisen den Vorteil auf mit wenigen Teilen auszukommen wodurch auch eine vereinfachte Montage möglich ist.

Fig. 6 zeigt eine 3D-Prinzipdarstellung der zweiten Ausführungsform des elektrischen Antriebs 61 mit einer Ausgangswelle 21, die bezüglich weiterer Ausgangswellen abgewinkelt ist. Das Gehäuse 17 des elektrischen Antriebs 61 weist einen Stecker 22 auf, der mit dem Gegenstecker eines Kabelbaums oder BUS-Systems verbindbar ist. Es ist auch denkbar anstatt des Steckers eine flexible elektrische Leitung aus dem Gehäuse 17 des elektrischen Antriebs 61 zu führen.

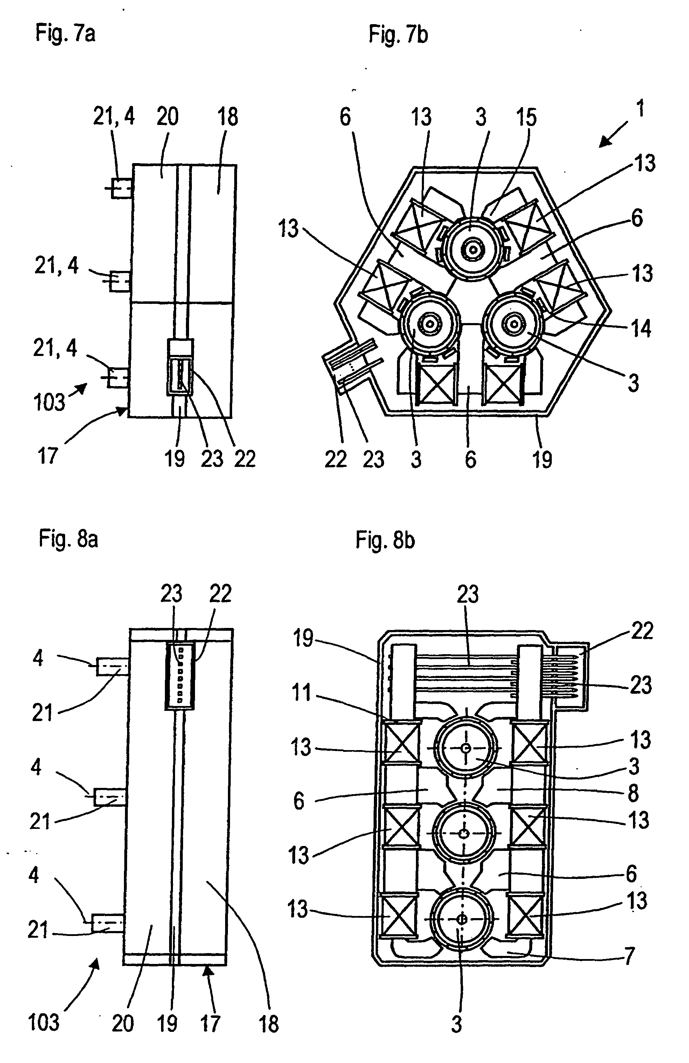

In den Fig. 7a und 7b ist eine erste Form eines Mehrwellenmotors 1 als Beispiel für die erste Ausführungsform des elektrischen Antriebs dargestellt. Dabei ist der Mehrwellenmotor 1 in einem Motorgehäuseteil 18 bzw. auf einer Zwischenplatte 19 montiert. Darin bzw. daran ist der Mehrwellenmotor 1 durch Heißverprägen oder Schnappen befestigt. Der Mehrwellenmotor 1 weist drei E-förmige Statorteile 6, mit Hauptpolen 15 und Zusatzpolen 14 auf, die als zusätzliche weichmagnetische Blechteile montiert sind. Die drei E-förmigen Statorteile sind dreieckförmig angeordnet und umgreifen drei Permanentmagnetrotoren 3, die ebenfalls dreieckförmig angeordnet sind. Dabei sind die drei Permanentmagnetrotoren 3 gleichzeitig und unabhängig voneinander betreibbar. Die Zwischenplatte 19 trennt einen durch das Motorgehäuseteil 18 begrenzten Motorraum von einem durch das Getriebegehäuseteil 20 begrenzten Getrieberaum. Durch diese Anordnung lassen sich die Getriebebestandteile, die gewöhnlich mit Schmiermittel versehen sind von den Motorbestandteilen trennen. Der Mehrwellenmotor 1 kann grundsätzlich auch mit dem Getriebe in einem Gehäuse untergebracht sein. Aus dem Getriebegehäuseteil 20 treten drei Ausgangswellen 21 aus, die nicht mit den Rotorachsen des Mehrwellenmotors fluchten müssen. Als Untersetzungsgetriebe bieten sich Stimradgetriebe, Schneckengetriebe oder auch Spannungswellengetriebe oder Kombinationen aus diesen an. Im vorliegenden Beispiel sind leitende Elemente 23, die als Leitbleche oder Lötstifte ausgeführt sein können auf der Zwischenplatte 19 zu einem Steckeranschluss 22 geführt. Die Zwischenplatte 19 kann grundsätzlich als Leiterplatte mit Steckeranschluss ggf. mit einer Gehäusefunktion ausgeführt sein.

In den Fig. 8a und 8b ist eine erste Variante des Mehrwellenmotors 1 mit Gehäuse als weiteres Beispiel für die erste Ausführungsform des elektrischen Antriebs dargestellt. Der Mehrwellenmotor 1 besteht im wesentlichen aus zwei kammförmigen Statorteilen 6 und drei Permanentmagnetrotoren 3. Auch hier sind alle Permanentmagnetrotoren 3 gleichzeitig und unabhängig voneinander betätigbar. Die mittleren Statorpolschenkel 7 sind entsprechend mit dem zweifachen Querschnitt der äußeren Statorpolschenkel 8 ausgeführt. Die Statorteile 6 sind vorzugsweise aus Blechlamellen paketiert, es ist aber auch denkbar Sinterteile zu verwenden. Zusatzpole (hier nicht dargestellt) dienen in erster Linie dazu das Selbsthaltemoment der Permanentmagnetrotoren zu erhöhen. Die Spulen 13 jedes Statorteils 6 sind auf einem gemeinsamen Spulenkörper 11 gewickelt, die so verlängert sind, dass leitende Elemente 23 in Form von Lötstiften einpressbar sind. Ein Teil der leitenden Elemente 23 verbindet die Spulenkörper 11 beider Statorteile 6 miteinander. Alle leitenden Elemente 23 erstrecken sich in einen Steckeranschluss 22 einer Zwischenplatte 19, die ein Motorgehäuse 18 von einem Getriebegehäuse 20 trennt. Aus dem Getriebegehäuse 20 treten Ausgangswellen 21 aus, die nicht mit den Rotorachsen übereinstimmen müssen. Durch das nicht näher dargestellte Getriebe ist die Lage der einzelnen Ausgangswellen 21 den geometrischen Verhältnissen entsprechend mehr oder weniger frei wählbar. Wegen ihres hervorragenden Wirkungsgrades werden Stimradgetriebe bevorzugt. Bei engen Bauraumverhältnissen eignen sich insbesondere auch Spannungswellengetriebe (auch als Harmonic Drive bekannt) oder Wolfromgetriebe (z.B. fünfrädriges reduziertes Umlaufrädergetriebe), weil sich durch diese eine besonders hohe Untersetzung in einer Getriebestufe realisieren lassen. Nachteilig ist bei diesen Getrieben der deutlich geringere Wirkungsgrad.

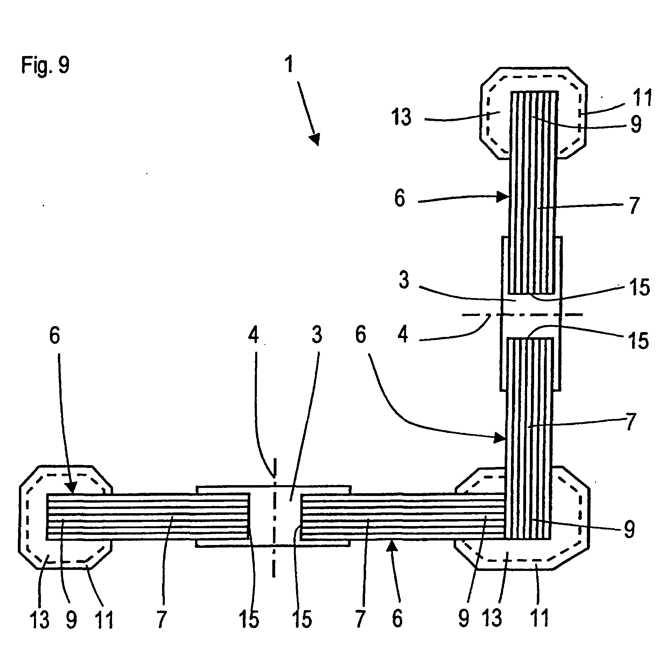

Fig. 9 zeigt eine erste Form eines Mehrwellenmotors1 als Beispiel für die zweite Ausführungsform des elektrischen Antriebs, mit zwei Permanentmagnetrotoren 3, vier U-förmigen Statorteilen 6, die identisch ausgebildet sind und drei Satorspulen 13, die auf jeweils einen Isolierstoffkörper 11 aus Kunststoffmaterial gewickelt sind. Die U-förmigen Statorteile bestehen aus je zwei Statorpolschenkel 7, deren Enden Hauptpole 15 bilden. Die Statorpolschenkel 7 werden durch ein Statorjoch 9 miteinander verbunden. Die Statorteile 6 sind aus gestanzten Blechen paketiert, z.B. Stanzpaketiert. Die Statorjoche 9 zweier Statorteile 6 liegen eng aneinander an und sind rechtwinklig zueinander angeordnet. Ein Spulenträger 11 ist so dimensioniert, dass eine Ausnehmung beide Statorteile aufnehmen kann. Die Statorspule 13, die über beide Statorteile 6 gewickelt ist, weist die doppelte Windungszahl der beiden übrigen Spulen 13 auf. Die beiden Permanentmagnetrotoren 3 sind rechtwinklig zueinander angeordnet.

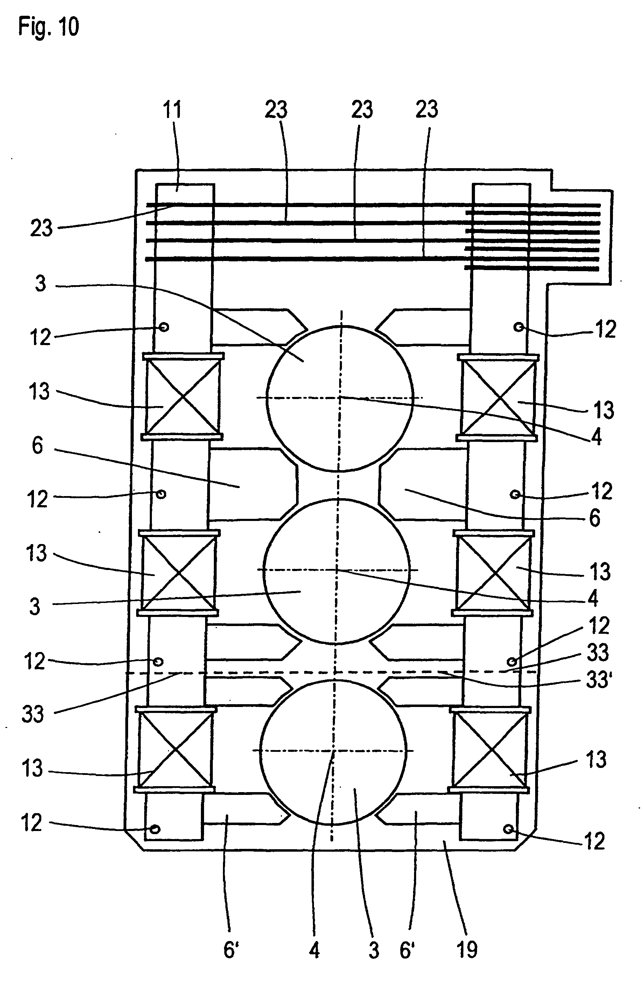

Fig. 10 zeigt eine besonders vorteilhafte und bevorzugte Variante der zweiten Ausführungsform des elektrischen Antriebs, welche die oben genannten Nachteile nicht aufweist. Der Mehrwellenmotor 1 besteht aus einem zweiteiligen Gehäuse (nicht dargestellt), einer Zwischenplatte 19, auf der zwei Baugruppen, bestehend aus je einem mit drei Statorspulen 13 bewickelten Isolierstoffkörper 11 befestigt sind. Die Befestigung auf der Zwischenplatte 19 kann durch Nieten, Heißverprägen, Stecken (kraftschlüssig), Schnappen etc. erfolgen. Die beiden Isolierstoffkörper 11 sind durch leitende Elemente 23, die in Form von Kontaktstiften in entsprechende Ausnehmungen gesteckt sind mechanisch miteinander verbunden. Die leitenden Elemente 23 verbinden die Statorspulen 13 elektrisch mit dem Stecker 22. In den Isolierstoffkörpern 11 sind Anschlussstellen 12 in Form von Kontaktstiften parallel zueinander eingesteckt. An diesen Anschlussstellen 12 werden die Statorwicklungen 13 beim Wickelvorgang angeschlagen. Um alle (drei) Statorspulen 13 einer Baugruppe 34 gleichzeitig wickeln und anschlagen zu können sind die Anschlussstellen 12 und die Statorspulen 13 gleich weit voneinander entfernt und untereinander äquidistant angeordnet. Die Verbindung der Statorspulen 13 mit den leitenden Elementen 23 kann direkt oder beim Wickeln durch den Wickeldraht hergestellt werden. Es ist auch denkbar, dass in oder an der Zwischenplatte 19 Leitbleche vorhanden sind, die eine Verbindung zwischen den Anschlussstellen 12 und den leitenden Elementen 23 herstellen. Hierbei können Klemm-Schneid-Verbindungen, aber auch Lötverbindungen etc. eingesetzt werden. Die Isolierstoffkörper 11 und die Zwischenplatte 19 (Träger) weisen Sollknickstellen 33, 33' auf, die miteinander fluchten. Nach der Bewicklung der Baugruppen und der Montage auf die Zwischenplatte 19 und ins Gehäuse wird der Mehrwellenmotor 1 entlang der Sollknickstelle abgeknickt. Die Lagerstellen der Permanentmagnetrotoren befinden sich vorzugsweise in den Gehäuseteilen.

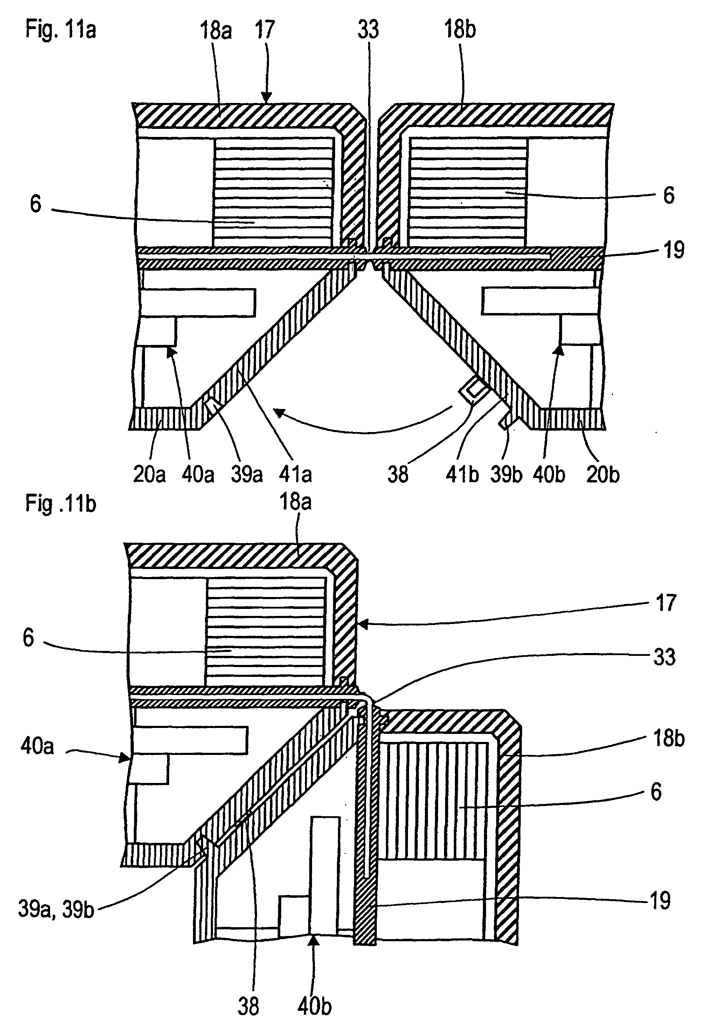

Fig. 11a und Fig. 11 b zeigt eine Schnittdarstellung eines abknickbaren Mehrwellenmotors 1 gemäß der Variante aus Fig. 10, mit einem Gehäuse 17, einem als Zwischenplatte 19 ausgebildeten Träger, auf dem beiderseits einer Sollknickstelle 33 Statorteile 6 montiert sind. Wie beispielhaft dargestellt, kann je ein Untersetzungsgetriebe 40a, 40b im Gehäuse 17 angeordnet sein. In der Zwischenplatte sind leitende Mittel 36' eingebettet, die elektrisch leitende Verbindungen über die Sollknickstelle 33 darstellen. Das Gehäuse 17 besteht aus zwei Formhälften, einem Motorgehäuseteil 18 und einem Getriebegehäuseteil 20. Das Motorgehäuseteil 18 und das Getriebegehäuseteil 20 bestehen aus je zwei zueinander nicht starr ausgebildeten Gehäuseteilen 18a, 18b, 20a, 20b die zumindest über Filmschamiere oder ähnliches (Sollknickstelle) miteinander verbunden sind (nicht dargestellt). Das Getriebegehäuseteil 20 ist mit schrägen Wandungen 41 a, 41 b ausgebildet, die hier um 45° geneigt sind. Durch die schrägen Wandungen 41a, 41b wird ein Freiraum geschaffen, der für ein Abknicken des gesamten Gehäuses 17 mit dem Mehrwellenmotor 1 notwendig ist. Um eine definierte Positionierung der Getriebegehäuseteile 20a, 20b zueinander zu gewährleisten sind Führungen 39a, 39b vorgesehen, die ineinander greifen könnnen.

Rastmittel 38 (nur teilweise zu erkennen) dienen dazu die abgeknickte Lage zu sichern. In Fig. 11b ist ein bereits abgeknickter Mehrwellenmotor 1 dargestellt.

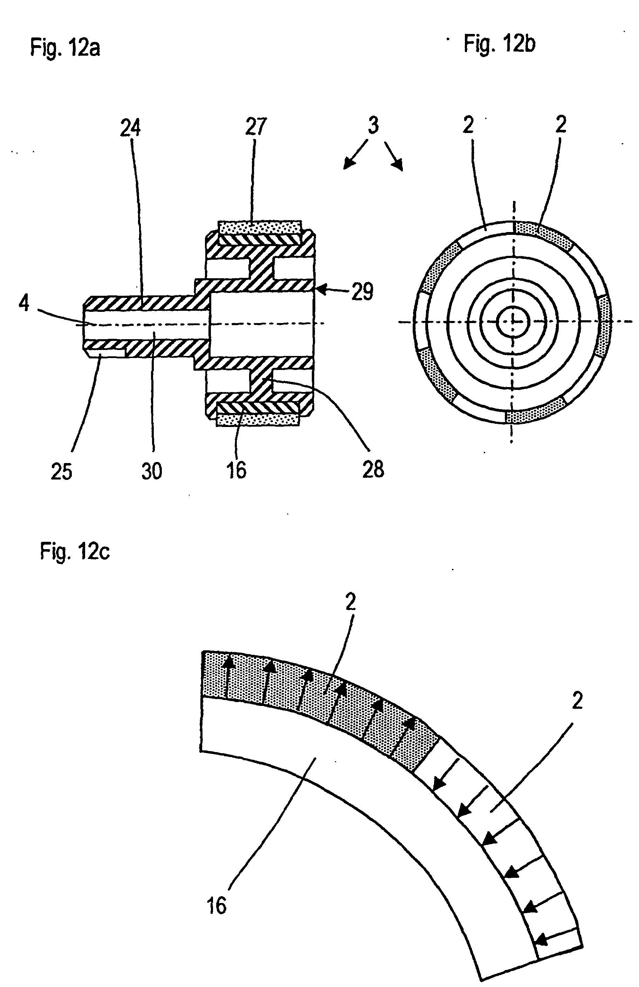

In den Fig. 12a, 12b, 12c ist ein Permanentmagnetrotor 3 dargestellt, bestehend aus einem Rotorkörper 29, mit einer Nabe 28, einer Rotorwelle 24, einem Ritzel 25, einer Lageraufnahme 30, die vorzugsweise auf einer feststehenden Achse gelagert wird, die mit dem Getriebegehäuseteil 20 verbunden ist, einem Rückschlussring 16, einem Permanentmagnetring 27, der so magnetisiert ist, dass zehn alternierende Rotorpole 2 entstehen, die abwechselnd radial nach außen bzw. radial nach innen magnetisiert sind, wie in Fig. 12c deutlich zu erkennen ist (Ringsegment mit zwei Rotorpolen 2). Die Rotorwelle 24 erstreckt sich von einem durch das Motorgehäuseteil 18 begrenzten Motorraum in einen durch das Getriebegehäuseteil 20 begrenzten Getrieberaum, wo das Ritzel 25 z.B. in ein mehrstufiges Stirnradgetriebe eingreift.

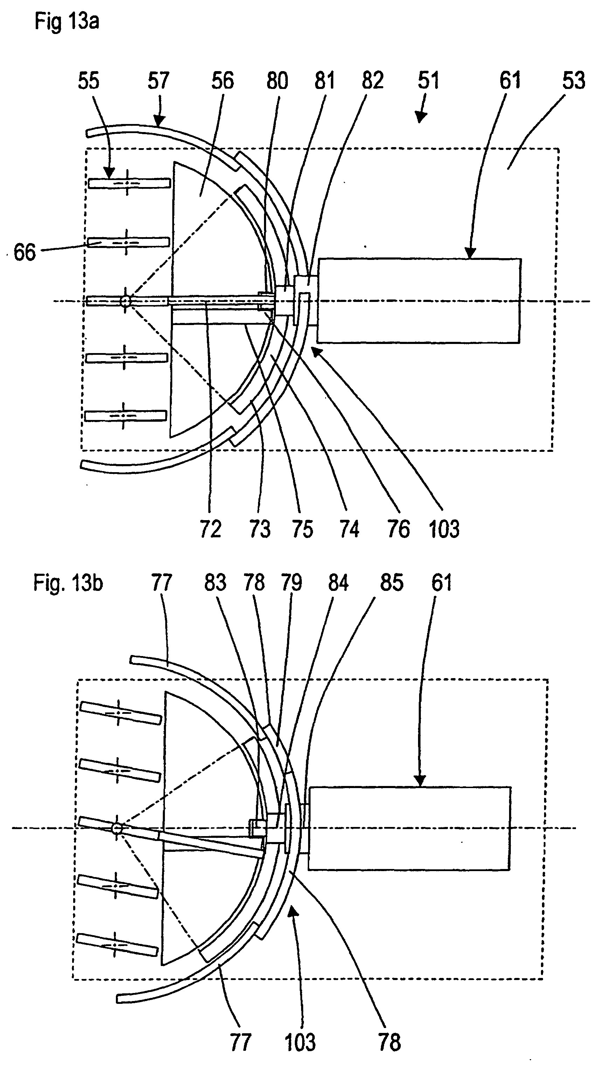

Die Fig. 13a bis 13f zeigen eine Belüftungsvorrichtung 51 mit einer dritten Ausführungsform des elektrischen Antriebs 61 in einer ersten Stellung, mit einer Luftrichtungssteuereinrichtung (oben/unten) 55, einer Luftrichtungssteuereinrichtung (rechts/links) 56 und einer Luftmengensteuereinrichtung 57. Die Luftrichtungssteuereinrichtung 55 besteht aus miteinander gekoppelten (z.B. durch eine Schubstange) im wesentlichen Luftführungslamellen 66, die Luftrichtungssteuereinrichtung 56 aus miteinander gekoppelten Kreisabschnittförmigen Luftführungsscheiben 67. Am Außenbereich der Luftführungslamellen 66 ist ein gabelförmiges Verstellelement 72 befestigt oder mit den Luftführungslamellen 66 einstückig. Das Verstellelement 72 ist mit einem Zahnradsegment 73 versehen, dessen Verzahnung 74 in Form einer Kronradverzahnung ausgebildet ist. Ein weiteres Zahnradsegment 75 weist eine Kronradverzahnung 76 auf und ist mit zumindest einer der Luftführungsscheiben (rechts/links) 67 fest verbunden. An Zylinderringsegmenten 77 sind Zahnradsegmente 78 mit je einer Kronradverzahnung 79 befestigt oder einstückig ausgebildet. Die Zylinderringsegmente 77 bilden zusammen mit den Zahnradsegmenten 78 die Luftmengensteuereinrichtung 57. Jede der Kronradverzahnungen 74, 76, 79 ist getrieblich mit einem von drei Ritzeln 80, 81, 82 in Eingriff. Die Ritzel sind axial versetzt und Bestandteil von Rotor- oder Getriebeausgangswellen 83, 84, 85 des als Multiwellenmotors bzw. Multiwellengetriebemotors ausgeführten elektrischen Antriebs 61. Die Rotor- oder Getriebeausgangswellen sind koaxial zueinander angeordnet und bilden zusammen mit den Ritzeln 80, 81, 82 eine Kaskade. Die Rotor- oder Getriebeausgangswellen sind mit drei zueinander axial versetzt und/oder koaxialen Rotoren, insbesondere Permanentmagnetrotoren direkt bzw. getrieblich verbunden. Der elektrische Antrieb 61 ist zentral im Luftströmungskanal 53 angeordnet. Es ist auch möglich den elektrischen Antrieb 61 seitlich am Luftströmungskanal 53 anzuordnen, um eine Querschnittsverengung und störende Geräusche zu vermeiden. Um die Bewegungsfreiheit des Zahnradsegments 75 nicht einzuschränken muss bei seitlichem Anbau entsprechender Bauraum zur Verfügung gestellt werden. Ein zentralere Einbau hat den Vorteil universeller Einsetzbarkeit. Der elektrische Antrieb kann für unterschiedliche Luftausströmerdesigns verwendet werden, da die mechanische Schnittstelle zwischen dem elektrischen Antrieb 61 und den zu verstellenden Luftrichtungs- und Luftmengensteuereinrichtungen 55, 56 auf einen kleinen Bereich begrenzt ist. Der elektrische Antrieb 61 ist durch drei oder vier Streben im Luftströmungskanal 53 gehalten.

Fig. 13b zeigt die Belüftungsvorrichtung mit der dritten Ausführungsform des elektrischen Antriebes in einer zweiten Stellung und gedrosselter Luftmengensteuereinrichtung.

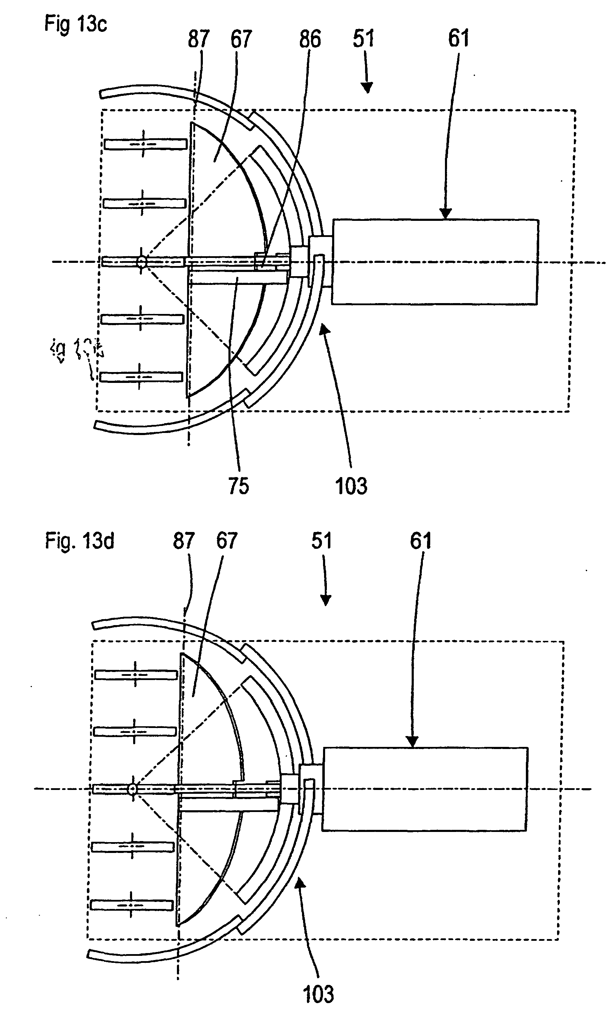

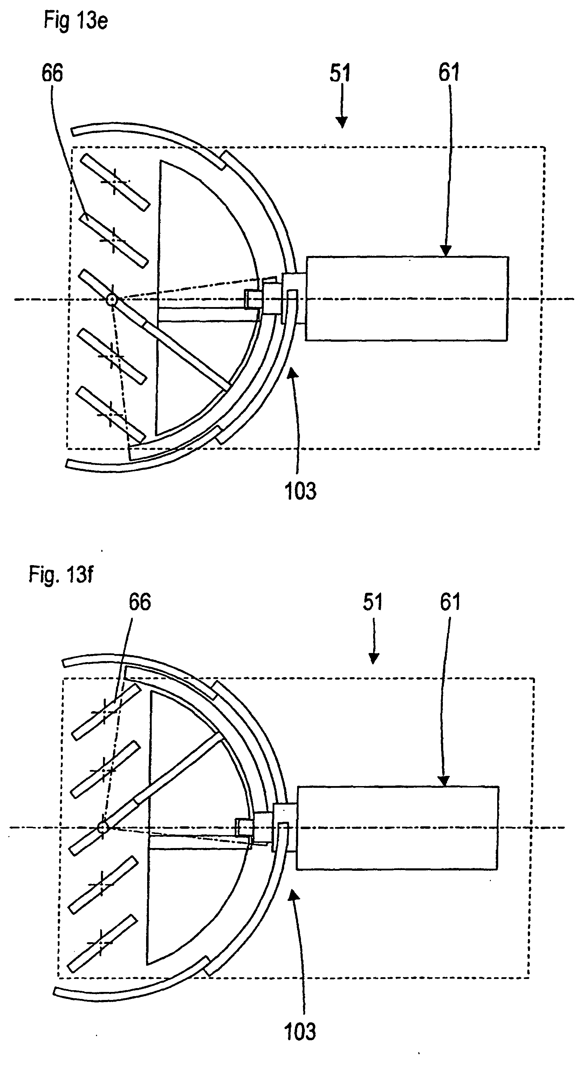

Die Fig. 13c und 13d zeigen die Belüftungsvorrichtung 51 mit der dritten Ausführungsform des elektrischen Antriebes 61 in einer dritten Stellung, in der die Luftführungsscheiben 67 (rechts/links) seitlich mehr oder weniger verschwenkt sind. Die Luftführungsscheiben 67 (rechts/links) sind mit Ausnehmungen 86 versehen, die als Freiraum für den behinderungsfreien Durchgang des Ritzels 80 und bei benachbarten Luftführungsscheiben für den behinderungsfreien Durchgang des Zahnradsegments 75 dient. Um die Kaskade aus Rotor- bzw. Getriebeausgangswellen 83, 84, 85 auf der vom elektrischen Antrieb 61 abgewandten Ende lagern zu können, kann die Ausnehmung 86 bis zur Schwenkachse 87 ausgedehnt sein. Im Bereich der Schwenkachse 87 ist ein Wellenende der inneren Rotoroder Getriebeausgangswelle 83 in einem festen Lager drehbar gelagert. Das Lager ist über ein Verbindungselement z.B. mit einer Begrenzungswandung des Luftströmungskanals 53 verbunden. Das Verbindungsmittel bildet auch das Schwenklager für die Luftführungsscheiben (rechts/links) aus.

Die Fig. 13e und 13f zeigen die Belüftungsvorrichtung mit der dritten Ausführungsform des elektrischen Antriebes in den beiden Extremstellungen der Luftführungslamellen 66 der Luftrichtungssteuerung 55 (oben/unten).

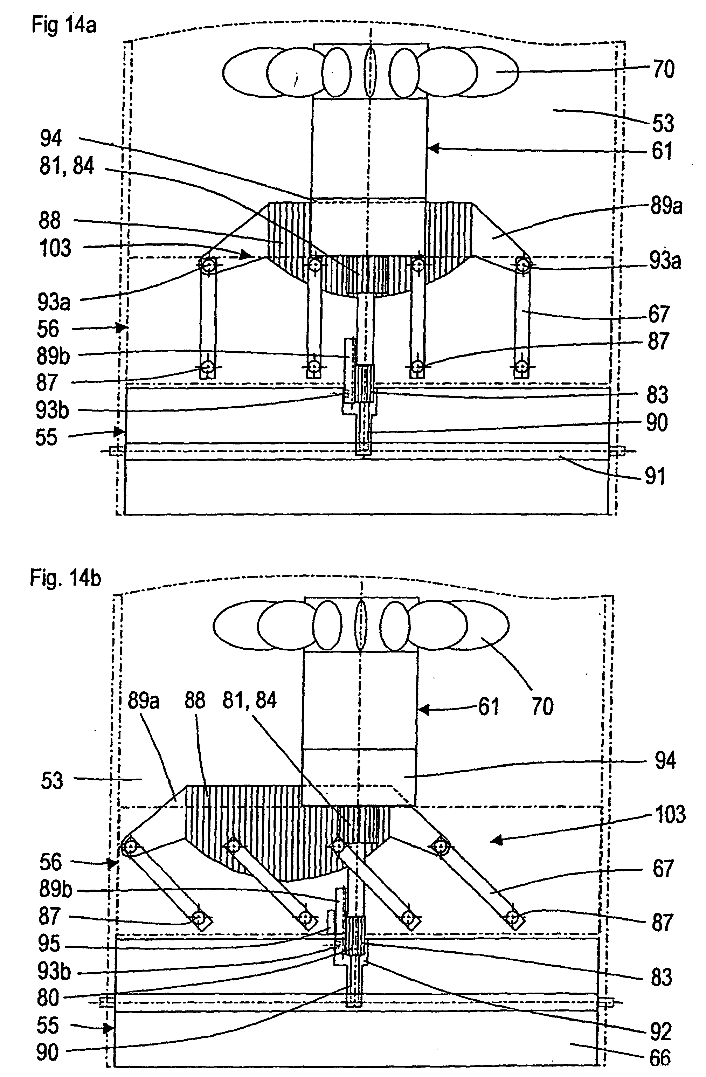

Die Fig. 14a und 14b zeigen eine Belüftungsvorrichtung mit einer vierten Ausführungsform des elektrischen Antriebs und der mechanischen Schnittstelle. Anstelle eines Zahnradsegments dient hier eine mit einer Verzahnung 88 versehene Schubstange 89a (89b) als Getriebeelement zur Übertragung der Drehbewegung des Ritzels 81 in eine Schwenkbewegung der Luftführungsscheiben 67 oder Luftführungslamellen. Die Schubstange 89 ist mit jeder Luftführungsscheibe/Luftführungslamelle 67 über eine Gelenkstelle 93 schwenkbar verbunden. Die Luftführungsscheiben/Luftführungslamellen 67 weisen daneben Schwenkachsen 87 auf um die sie schwenkbar im Luftführungskanal gelagert sind. Um das Zahnrad 81 in der Verzahnung 88 zu halten ist die Schubstange 89a in einer Führung 94 geführt, die aussermittig an der Rotor- bzw. Getriebeausgangswelle vorbeiführt ist. Für die Schubstange 89b kann hierzu eine feststehende Abstützung 95 dienen. Der elektrische Antrieb 61 ist feststehend im Luftführungskanal angeordnet (er kann auch seitlich platziert sein) und über Streben (nicht dargestellt) z.B. in einer den Luftströmungskanal begrenzenden Wandung befestigt. Da der elektrische Antrieb 61 feststehend ausgebildet ist muss das Ritzel 81 zur Verzahnung 88 eine Relativbewegung ausführen können. Hierfür ist die Verzahnung 88 entsprechend verlängert ausgebildet. Zumindest eine Luftführungsscheibe/Luftführungslamelle 67 ist mit einer Ausnehmung 92 versehen, um von der Rotor- bzw. Getriebeausgangswelle 83 nicht an einer Schwenkbewegung gehindert zu werden. Die Rotor- bzw. Getriebeausgangswelle 83 ist mit einem Lagerzapfen 90 versehen. Der Lagerzapfen 90 ist beispielhaft in einer feststehenden Achse 91 gelagert, die als Schwenkachse für eine der Luftführungslamellen 66 dient. Der elektrische Antrieb 61 kann ähnlich wie bei den Fig. 13a bis 13f ausgebildet sein. Zusätzlich ist der elektrische Antrieb 61 mit einem Lüfterrad 70 versehen, der von einem Zusatzmotor, vorzugsweise einem bürstenlosen Gleichstrommotor angetrieben wird. Es ist auch denkbar das Lüfterrad durch einen Mehrwellenmotor anzutreiben, der auch die Luftrichtungs- und/oder Luftmengensteuereinrichtung betätigt. Bei dem Mehrwellenmotor könnten Rotoren axial hintereinander und/oder koaxial zueinander angeordnet sein. Die Luftmengensteuereinrichtung ist in den Fig. 14a und 14b der Einfachheit halber weggelassen; sie könnte wie in den Fig. 13a bis 13f, oder als Schwenkklappe ausgebildet sein. Die Luftmengensteuereinrichtung kann mit den Luftrichtungssteuereinrichtungen 55, 56 auf einer Seite des elektrischen Antriebs 61 oder auf der gegenüberliegenden Seite angeordnet sein.

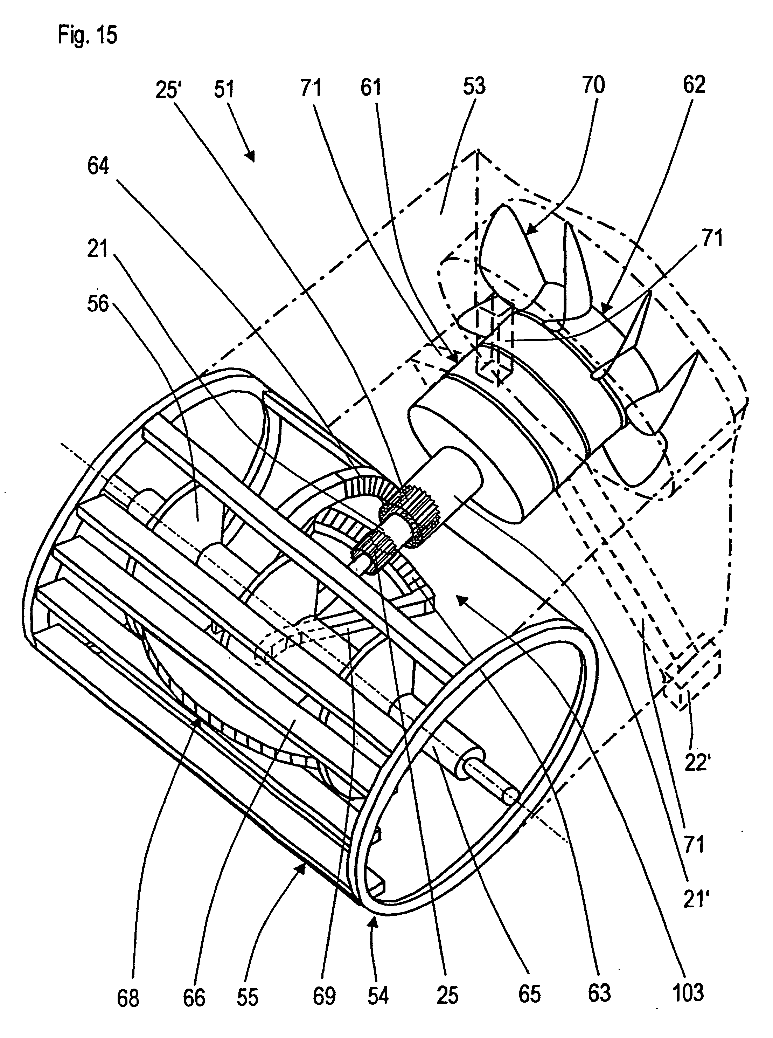

Fig. 15 zeigt eine Prinzipdarstellung einer Belüftungsvorrichtung 51 mit einer Variante der vierten Ausführungsform des elektrischen Antriebes 61. Hier besteht der Antrieb 61 aus einem Antriebsmotor, oder mehreren Antriebsmotoren, die axial hintereinander angeordnet sind. Der oder die Antriebsmotor/en weist/weisen koaxiale Ausgangswellen 21, 21' mit unterschiedlichen Längen auf, entsprechend einer Kaskade. Die Ausgangswellen 21, 21' sind jeweils mit einem Ritzel 25, 25' versehen. Jedes Ritzel 25, 25' ist mit einer der zueinander rechtwinkligen Luftrichtungssteuereinrichtung 55, 56, getrieblich in Eingriff. Die Luftrichtungssteuereinrichtung 55, die zur Höhenverstellung dient, ist als Luftführungswalze mit Luftführungslamellen 66, einer Achse 65 und einem Zahnradsegment 64 ausgebildet, wobei hier das Ritzel 25' an der äußeren koaxialen Ausgangswelle 21' mit dem Zahnradsegment 64 in Eingriff ist. Die Achse 65 der Luftführungswalze ist in einem Armaturenbrett befestigt. Eine zentrale Ausnehmung, die quer zur Achse 65 in dieser eingeformt ist, dient als Lager für die innere,koaxiale Ausgangswelle 21 und damit auch des Ritzels 25. Die Luftführungswalze ist mit der Achse 65 schwenkbar verbunden. Die Luftführungswalze kann auch als Handrad dienen. Die Luftrichtungssteuereinrichtung 56, die zur Seitenverstellung dient, ist in Form von Luftführungsscheiben 67 (hier als Halbscheiben dargestellt) ausgebildet, die in der Luftführungswalze schwenkbar gelagert sind. Zur Verstellung der Luftführungsscheiben 67 (rechts/links) dient im gezeigten Beispiel ein Zahnradsegment 63, das mit einer Verstellgabel 69 verbunden oder mit dieser einstückig ist. Ein Verstellrad 68 ist mit den Luftführungsscheiben 67 gelenkig verbunden. Das Verstellrad 68 wird bei einer Vertikalbewegung (oben/unten) der Luftführungslamellen 66 mitbewegt. Die Verstellgabel 69 führt nur bei Betätigung des Verstellrads 68 nach rechts oder links bzw. bei motorischem Antrieb des Ritzels 25' eine Schwenkbewegung aus und nimmt dabei die miteinander gekoppelten Luftführungsscheiben 67 mit. Die Kopplung kann durch eine Schubstange erfolgen. Die Verstellgabel 69 ist zu den Luftführungsscheiben 67 beweglich angeordnet. Um auch Extremlagen einstellen zu können ist ein mechanischer Ausgleich der beweglichen Verbindung zwischen Verstellgabel 69 und einer Luftführungsscheibe 67 notwendig. Dies wird dadurch erreicht, dass die Verstellgabel 69 elastisch nachgiebig ausgebildet ist. Zur besseren Führung kann die Verstellgabel 69 in einer Ausnehmung in der zentralen Achse 65 beweglich gelagert sein. Der Luftführungskanal 53 ist im Bereich des Lüfters 62 am Lüfterrad 70 angepasst und zumindest dort rund ausgeführt (nicht dargestellt), zur Luftführungswalze hin kann der Querschnitt kontinuierlich in eine rechteckige Form übergehen. Der elektrische Antrieb 61 wird über Streben 71 im Zentrum des Luftführungskanals 53 gehalten. Die Spannungsversorgung des elektrischen Antriebs und des Lüfters erfolgt an oder in diesen Streben 71.

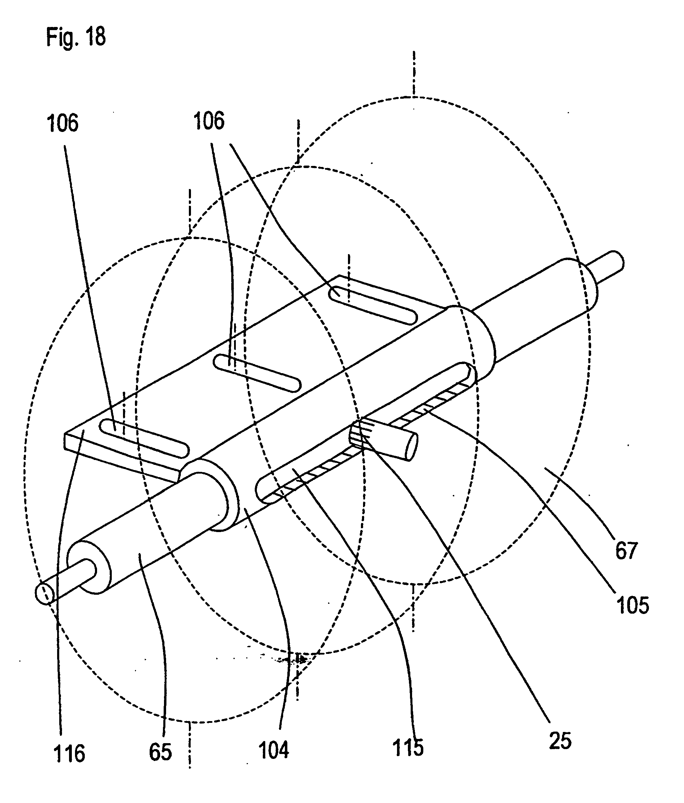

In einer in Fig. 18 angedeuteten Variante zu Fig. 15 kann die Luftrichtungssteuereinrichtung 55 (oben/unten) von der Luftrichtungssteuereinrichtung 56 (rechts/links) unabhängig und relativ zu dieser schwenkbar sein. Dadurch ist keine nachgiebige Verstellgabel mehr notwendig. Die rechts/links-Verstellung kann dann z.B. über ein verzahntes Verschieberohr 104 durchgeführt werden, die über die zentrale Achse 65 geschoben ist. die Verzahnung 105 begrenzt dabei ein Langloch 115 als Freiraum für das Ritzel 25, wobei das Ritzel 25 in der Achse 65 gelagert ist und durch seine Drehung das Verschieberohr hin und her bewegt. Das Verschieberohr 103 weist einen Ausleger 116 auf, der mit Langlöchern als Mitnehmer 106 versehen ist. In den Langlöchem sind die Luftführungsscheiben 67 geführt. Schwenkbar gelagert sind die Luftführungsscheiben 67 entweder in der Achse 65 oder in einem Zusatzrahmen. Der elektrische Antrieb 61 kann zusätzlich auch mit einer Luftmengensteuereinrichtung gekopplt sein.

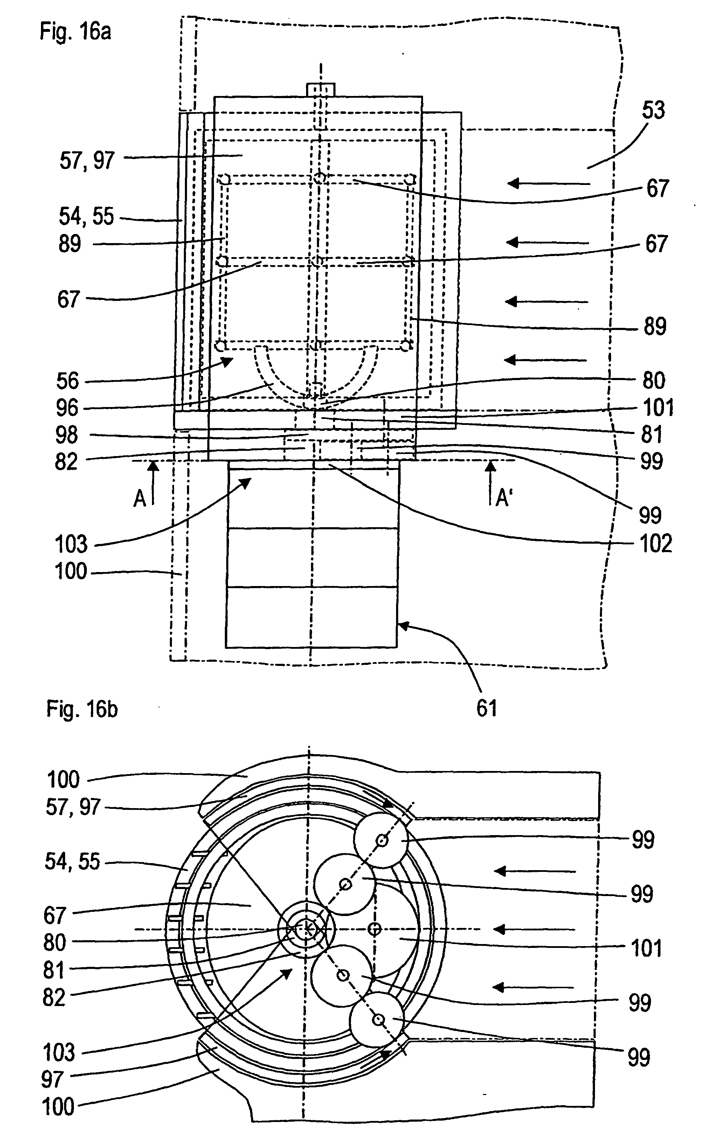

Die Fig. 16a und 16b zeigen eine Belüftungsvorrichtung mit einer fünften Ausführungsform des elektrischen Antriebes 61 und der mechanischen Schnittstelle und eine alternative Einbaulage. Die Belüftungsvorrichtung weist eine Luftrichtungssteuereinrichtung (oben/unten) 55, eine Luftrichtungssteuereinrichtung (rechts/links) 56, eine Luftmengensteuereinrichtung 57, den elektrischen Antrieb 61, einen Luftströmungskanal 53 und einen Luftausströmer 54, der in einem Armaturenbrett 100 eines Kraftfahrzeugs angeordnet ist, auf. Der Luftausströmer 54 wird von der Luftrichtungssteureinrichtung (oben/unten) 55 gebildet und ist als zylindrischer Käfig ausgeführt. In dem zylindrischen Käfig ist zumindest annähernd koaxial eine Luftrichtungssteuereinrichtung (rechts/links) 56 angeordnet, die in Form eines zweiten zylindrischen Käfigs in dem drei Luftführungsscheiben (rechts/links) 67 schwenkbar gelagert sind. Die Mittelachse des elektrischen Antriebs 61 ist parallel zur Schwenkachse der Luftrichtungssteuereinrichtung (oben/unten) 55. Beide Achsen liegen nahe beieinander. Bei Verstellung der Luftrichtungssteuereinrichtung (oben/unten) 55 schwenkt die Luftrichtungssteuereinrichtung (rechts/links) 56 nicht mit. Die Luftführungsscheiben 67 sind untereinander durch zumindest eine Schubstange 89 schwenkbar verbunden. In Fig. 16a sind zwei Schubstangen 89 dargestellt. An einer äußeren Luftführungsscheibe 67 ist ein Zahnrad oder Zahnringsegment 96 mit etwas Abstand vom Schwenkzentrum angeformt oder montiert; sie wird von einem zentrumsnah gelagerten Ritzel angetrieben. Im Idealfall liegt die Schwenkachse auf dem Teilkreis des Ritzels 80 (in Fig. 16b ist der elektrische Antrieb 61 der Einfachheit halber so dargestellt, dass seine Achse mit der Schwenkachse übereinstimmt). Die Luftmengensteuereinrichtung 57 besteht aus zwei Zylinderringsegmenten 97, die getrieblich so miteinander gekoppelt sind, dass sie gegenläufig visierartig betätigbar sind. Die Zylinderringsegmente 97 und die Käfige der Luftrichtungssteuerung 55, 56 weisen eine gemeinsame Schwenk- bzw. Drehachse auf. Der elektrische Antrieb 61 besteht aus drei miteinander verbundenen Schrittmotoren, deren Ausgangswellen koaxial zueinander drehbar sind. Um ein größeres Moment aufbringen zu können sind die Rotorwellen der Schrittmotoren z.B. mit je einem Planetengetriebe getrieblich in Eingriff. Die Rotor- bzw. Getriebeausgangswellen enden kaskadenartig und weisen Ritzel 80, 81, 82 auf. Dadurch ist ein kompakter Aufbau des elektrischen Antriebes 61 gegeben. Die Zylinderringsegmente 97 der Luftmengensteuereinrichtung 57 sind in einem Randbereich mit je einer Innenverzahnung versehen, in welche Zwischenräder 99 eingreifen. Je zwei Zwischenräder 99 sind erforderlich um die gewünschte Gegenläufigkeit der Schließbewegung zu erreichen, wenn beide Zylinderringsegmente 97 von demselben Schrittmotor und demselben Ritzel 82 angetrieben werden. Die Zwischenräder 99 dienen zur Überbrückung des Abstands zwischen Ritzel 82 und den Innenverzahnungen der Zylinderringsegmente 97, es ist aber auch denkbar hier Untersetzungsgetriebestufen vorzusehen, um auf ein Planetengetriebe am Motorausgang verzichten zu können. Gleiches gilt für den Antrieb des Käfigs der Luftrichtungssteuereinrichtung (oben/unten) 55. Auch hier ist eine Innenverzahnung (am Käfig) vorgesehen, in das ein Zwischenrad 101 eingreift, das von dem Ritzel 81 angetrieben wird. Gelagert sind die Zwischenräder oder sonstigen Untersetzungsgetrieberäder einerseits in einer Lagerplatte 98 und andererseits in einem Lagerschild 102 des elektrischen Antriebs 61.

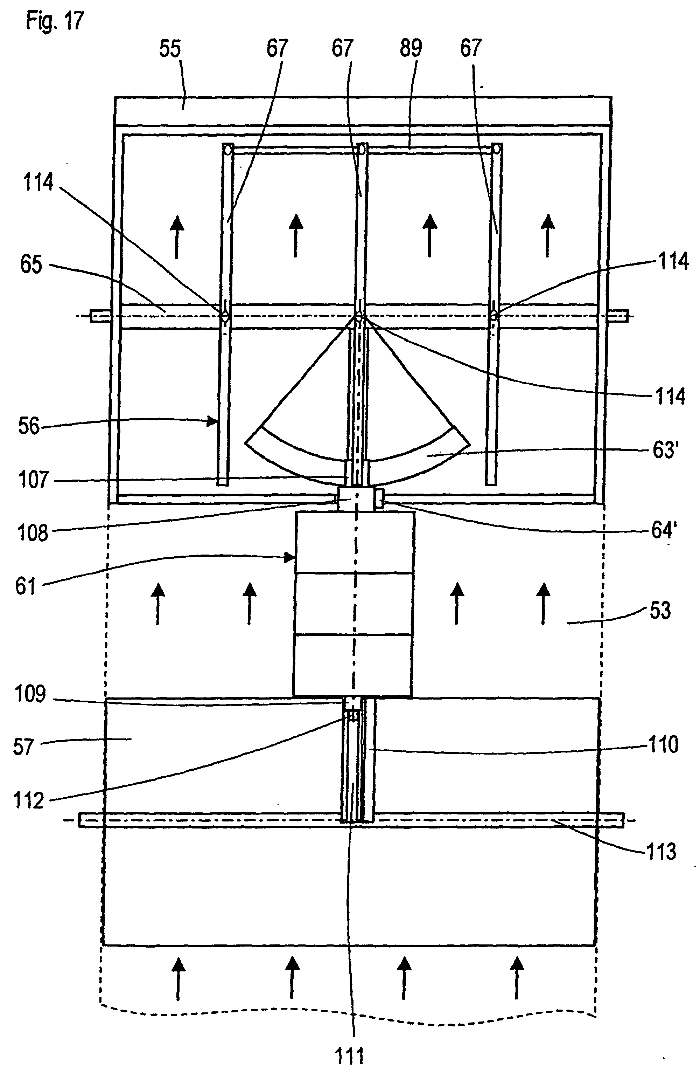

Fig. 17 zeigt eine Belüftungsvorrichtung 51 mit einer sechsten Ausführungsform des in einen Strömungskanal 53 angeordneten elektrischen Antriebes 61, mit einer Luftrichtungssteuereinrichtung (oben/unten) 55, einer Luftrichtungssteuereinrichtung (rechts/links) 56 und einer Luftmengensteuereinrichtung 57. Die Luftrichtungssteuereinrichtung (rechts/links) 56 besteht aus drei Luftführungsscheiben 67, die miteinander über eine Schubstange 89 schwenkbar verbunden sind. Die mittlere Luftführungsscheibe 67 weist ein Zahnradsegment 63' auf, in das ein erstes Ritzel 107 eingreift. Ein zweites Ritzel 108 ist mit einem Zahnradsegment 64' in Eingriff, mit dem die Luftrichtungssteuereinrichtung (oben/unten) 55 versehen ist. Die Zahnradsegmente 63' und 64' sind im wesentlichen rechtwinklig zueinander angeordnet. Beide Luftrichtungssteuereinrichtungen 55, 56 sind unabhängig voneinander schwenkbar. Die Luftrichtungssteuereinrichtung (oben/unten) 55 schwenkt um eine zentrale Achse 65 und die Luftführungsscheiben 67 der Luftrichtungssteuerung (rechts/links) 56 schwenken um Schwenkzapfen 114. Die Schwenkzapfen können auf der Achse 65 oder an einem äußeren Rahmen bzw. der Wandung des Luftsträmungskanals 53 angeordnet sein. Die Luftmengensteuereinrichtung 57 ist als Klappe ausgebildet, die ein Zahnradsegment 110 aufweist, in welches ein drittes Ritzel 109 eingreift. Zur Abstützung und Aufrechterhaltung des Zahneingriff zwischen dem dritten Ritzel 109 und dem Zahnradsegment 110 kann eine Führungsnut 111 am Zahnradsegment 110 vorgesehen sein, in das ein Achszapfen 112 eingreift. Die Klappe (Luftmengensteuereinrichtung 57) ist hier über eine zentrale Achse 113 schwenkbar gelagert. Der elektrische Antrieb 61 weist drei Schrittmotoren oder bürstenlose Gleichstrommotoren auf, die axial aneinander anschließen und eine kompakte Einheit bilden. Zwei Ausgangswellen sind koaxial zueinander angeordnet eine weitere Ausgangswelle tritt an der gegenüberliegenden Seite des elektrischen Antriebes axial aus diesem heraus. Der elektrische Antrieb 61 ist über Streben (hier nicht dargestellt) mit Wänden des Luftströmungskanals 53 verbunden.

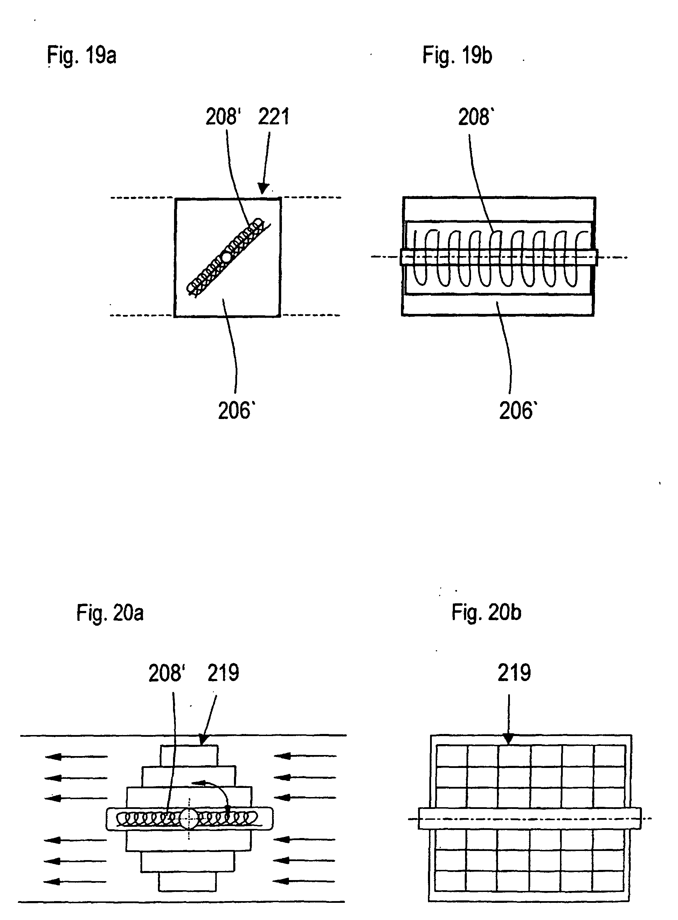

Fig. 19 zeigt eine schematische Darstellung einer kombinierten Luftmengensteuereinrichtung 206' mit Heizvorrichtung 208'. Fig. 19a und 19b zeigen ein Heizelement integriert in eine Klappe zur Steuerung der Luftmenge. Vorzugsweise wird eine große Fläche der Klappe von der aktiven Heizvorrichtung 208' bedeckt, um die Wärmeübertragung an die vorbeiströmende Luft zu erhöhen. Die kombinierte Luftmengensteuereinrichtung 206' mit Heizvorrichtung 208' stellt ein Heiz- und Luftmengensteuermodul 221 dar.

Fig. 20 zeigt eine schematische Darstellung eines Heiz- und Luftmengensteuermoduls 221 mit zusätzlichen Einrichtungen zur Vergrößerung der Wärme abgebenden Oberfläche. Fig. 20a und 20b zeigen hierbei eine wärmeleitende Struktur 219 in Schachtelform, welche der Heizvorrichtung unmittelbar zugeordnet ist.

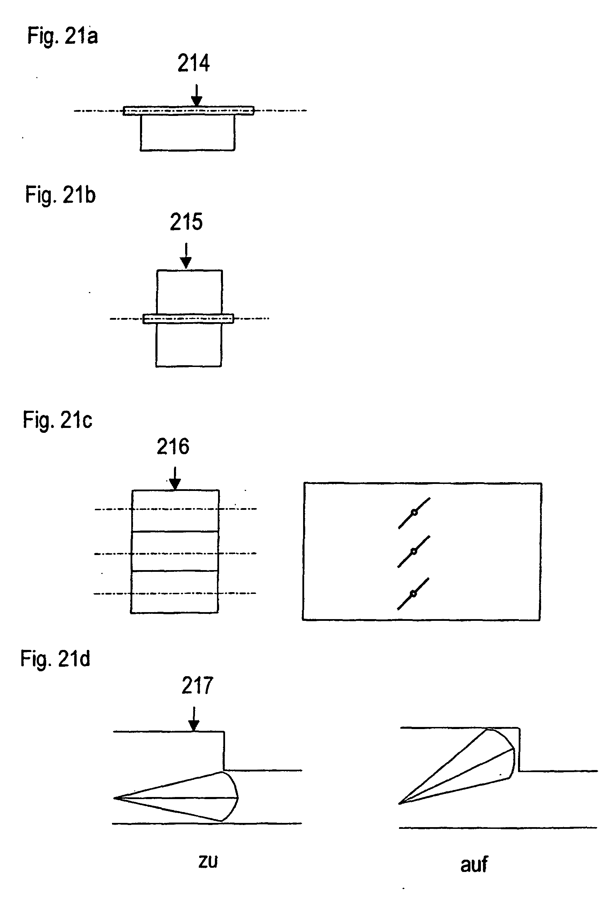

Fig. 21 zeigt verschiedene Ausführungsvarianten von Luftmengensteuereinrichtungen. Fig. 21 a zeigt eine einseitig gelagerte Klappe 214. Fig. 21 b zeigt eine ungefähr mittig gelagerte Klappe 215. Fig. 21c zeigt eine Jalousieklappe 216. Sie zeichnet sich gegenüber den in Fig. 21a und 21b dargestellten Varianten durch eine kleine Baulänge aus. Fig. 21d zeigt eine Visierklappe 217.

### Bezugszeichenliste

- 1: Mehrwellenmotor
- 2: alternierende Pole
- 3: Permanentmagnetrotor
- 4: Drehachse
- 6, 6': Statorteile
- 7: Statorpolschenkel (äußere)
- 8: Statorpolschenkel (mittlere)
- 9: Statorjoch
- 11: Isolierstoffkörper
- 12: Anschlussstellen
- 13: Statorspulen
- 14: Zusatzpole
- 15: Hauptpole
- 16: Rückschlussring
- 17: Gehäuse
- 18, 18a, 18b: Motorgehäuseteil
- 19: Zwischenplatte
- 20, 20a, 20b: Getriebegehäuseteil
- 21: Ausgangswelle
- 22, 22': Stecker
- 23: leitende Elemente
- 24: Rotorwelle
- 25, 25', 25": Ritzel
- 27: Permanentmagnetring
- 28: Nabe
- 29: Rotorkörper
- 30: Lageraufnahme
- 33, 33': Sollknickstelle
- 38: Rastmittel
- 39a, 39b: Führungen
- 40, 40a, 40b: Untersetzungsgetriebe
- 41a, 41b: schräge Wandung
- 51: Belüftungsvorrichtung
- 52: Heizungs- oder Klimaanlage
- 53: Luftströmungskanal
- 54: Luftausströmer
- 55: Luftrichtungssteuereinrichtung (oben/unten)
- 56: Luftrichtungssteuereinrichtung (rechts/links)
- 57: Luftmengensteuereinrichtung
- 58: Heizmodul
- 59: Lüftermodul
- 60: Heizelement
- 61: elektrischer Antrieb
- 62: Lüfter
- 63, 63': Zahnradsegment (rechts/links)
- 64, 64': Zahnradsegment (oben/unten)
- 65: Achse
- 66: Luftführungslamellen (oben/unten)
- 67: Luftführungsscheiben (rechts/links)
- 68: Verstellrad (rechts/links)
- 69: Verstellgabel
- 70: Lüfterrad
- 71: Streben
- 72: Verstellelement (Fig. 13)
- 73: Zahnradsegment (unten/oben)
- 74: Kronradverzahnung (unten/oben)
- 75: Zahnradsegment (rechts/links)
- 76: Kronradverzahnung (rechts/links)
- 77: Zylinderringsegmente
- 78: Zahnradsegmente (Luftmenge)
- 79: Kronradverzahnung (Luftmenge)
- 80: Ritzel
- 81: Ritzel
- 82: Ritzel
- 83: Rotor- oder Getriebeausgangswelle
- 84: Rotor- oder Getriebeausgangswelle
- 85: Rotor- oder Getriebeausgangswelle
- 86: Ausnehmung in Luftführungsscheibe
- 87: Schwenkachse einer Luftführungsscheibe
- 88: Schubstange/Zahnstange
- 89: Schubstange (89a, 89b)
- 90: Lagerzapfen
- 91: feststehende Achse
- 92: Ausnehmung
- 93: Gelenkstellen (93a, 93b)
- 94: Führung (Schubstange)
- 95: Abstützung
- 96: Zahnrad/Zahnringsegment
- 97: Zylinderringsegment
- 98: Lagerplatte
- 99: Zwischenrad
- 100: Armaturenbrett
- 101: Zwischenrad
- 102: Lagerschild
- 103: mechanische Schnittstelle
- 104: Schieberohr
- 105: Verzahnung (im Schieberohr)
- 106: Mitnehmer
- 107: Ritzel
- 108: Ritzel
- 109: Ritzel
- 110: Zahnradsegment
- 111: Führungsnut
- 112: Achszapfen
- 113: zentrale Achse
- 114: Schwenkzapfen
- 115: Langloch
- 116: Ausleger
- 201: Belüftungsvorrichtung
- 202: Heizungs-/ Klimaanlage
- 203: Luftströmungskanal
- 204: Luftausströmer
- 205: Luftrichtungssteuereinrichtung (oben / unten)
- 205': Luftrichtungssteuereinrichtung (links / rechts)
- 206,206': Luftmengensteuereinrichtung
- 207: Multifunktionsbaugruppe
- 208, 208': Heizvorrichtung
- 209: Bedienelement
- 210: Aktuator zur Verstellung der Luftmengensteuereinrichtung
- 211: Lüftervorrichtung
- 212: Aktuator zur Luftrichtungssteuereinrichtung
- 213: Elektronikmodul
- 214: einseitig gelagerte Klappe
- 215: ungefähr mittig gelagerte Klappe
- 216: Jalousieklappe
- 217: Visierklappe
- 218: Luftmengensteuermodul
- 219: wärmeleitende Strukturen
- 220: Heizmodul
- 221: Heiz- und Luftmengensteuermodul
- 222: Aktuatormodul zur Verstellung der Luftmengensteuereinrichtung
- 223: Lüftermodul
- 224: Aktuatormodul zur Luftrichtungssteuereinrichtung
- 225: einfache / universelle mechanische Schnittstelle
- 226: Weiterleitungsmittel für Energie
- 227: Element zur Erzeugung von Licht
- 228: Weiterleitungsmittel für Licht
- 229: Weiterleitungsmittel für Informationen

## Patentansprüche

1. Belüftungsvorrichtung (51, 201) für Fahrzeuge mit einer Multifunktionsbaugruppe (207), von der das optische Design aller im Fahrzeuginnenraum sichtbaren Komponenten unabhängig ist, insbesondere in Verbindung mit einer Heizungs- oder Klimaanlage (52, 202), mit Luftströmungskanälen (53, 203) und mindestens einem Luftausströmer (54, 204) mit mindestens einer Luftrichtungssteuereinrichtung (55, 56, 205, 205') und/oder einer Luftmengensteuereinrichtung (57, 206, 206'), **dadurch gekennzeichnet, dass** die Multifunktionsbaugruppe (207) aus mindestens einem Aktuator (212) zur Verstellung der Luftrichtungssteuereinrichtung (55, 56, 205, 205') und/oder einem Aktuator (210) zur Verstellung der Luftmengensteuereinrichtung (57, 206, 206') und/oder einer Heizvorrichtung (208, 208') und/oder einer Lüftervorrichtung (62, 211) besteht, die Multifunktionsbaugruppe (207) universell einsetzbar ist, insbesondere für unterschiedliche Luftausströmer (54, 204) zumindest innerhalb eines Fahrzeuges sowie verschiedener Fahrzeuge und dass die Multifunktionsbaugruppe (207) dezentral ist.

2. Belüftungsvorrichtung nach Anspruch 1, **dadurch gekennzeichnet, dass** die Luftmengensteuereinrichtung (57, 206, 206') und/oder die Luftrichtungssteuereinrichtung (55, 56, 205, 205') Bestandteil der Multifunktionsbaugruppe (207) sind/ist.

3. Belüftungsvorrichtung nach zumindest einem der vorangehenden Ansprüche, **dadurch gekennzeichnet, dass** der Aufbau modular ist, wobei insbesondere zumindest ein Aktuator (212) zur Verstellung der Luftrichtungssteuereinrichtung (55, 56, 205, 205') ein Aktuatormodul (224) für die Luftrichtungssteuerung und/oder der Aktuator (210) zur Verstellung der Luftmengensteuereinrichtung (57, 106, 106') ein Aktuatormodul (222) für die Luftmengensteuerung und/oder die Luftmengensteuereinrichtung (57, 206, 206') ein Luftmengensteuermodul (218) und/oder die Heizvorrichtung (208, 208') ein Heizmodul (58, 220) und/oder die Lüftervorrichtung (59, 211) ein Lüftermodul (223) darstellen/darstellt.

4. Belüftungsvorrichtung nach zumindest einem der vorangehenden Ansprüche, **dadurch gekennzeichnet, dass** die Heizvorrichtung (208, 208') und die Luftmengensteuereinrichtung (57, 206, 206') ein gemeinsames Heiz- und Luftmengensteuermodul (221) darstellen.

5. Belüftungsvorrichtung nach zumindest einem der vorangehenden Ansprüche, **dadurch gekennzeichnet, dass** die Heizvorrichtung (208, 208') zumindest ein Heizelement aufweist, welches in die Einrichtung zur Luftmengensteuerung (57, 206, 206', 218), insbesondere in einer Luftmengensteuerungsklappe, integriert ist.

6. Belüftungsvorrichtung nach zumindest einem der vorangehenden Ansprüche, **dadurch gekennzeichnet, dass** die Luftmengensteuereinrichtung (57, 206, 206') als einseitig gelagerte Klappe (214), ungefähr mittig gelagerte Klappe (215), Jalousieklappe (216), Visierklappe (217) oder aus zwei gegensinnig betreibbaren zylinderringsegmentförmigen Visieren (97) ausgeführt ist.

7. Belüftungsvorrichtung nach zumindest einem der vorangehenden Ansprüche, **dadurch gekennzeichnet, dass** die Heizvorrichtung (208, 208') als Haupt- oder Zusatzheizung eingesetzt werden kann, wobei zumindest ein Heizelement starr oder beweglich im Luftstrom angeordnet ist.

8. Belüftungsvorrichtung nach zumindest einem der vorangehenden Ansprüche, **dadurch gekennzeichnet, dass** die Lüftervorrichtung (59, 211) als Haupt- oder Zusatzlüftung eingesetzt werden kann und aus einem Axial- oder Radiallüfter besteht.

9. Belüftungsvorrichtung nach zumindest einem der vorangehenden Ansprüche, **dadurch gekennzeichnet, dass** mindestens ein Aktuator (212) zur Luftrichtungssteuerung im Windschatten eines Axiallüfter-Antriebsmotors angeordnet ist.

10. Belüftungsvorrichtung nach zumindest einem der vorangehenden Ansprüche, **dadurch gekennzeichnet, dass** der/die Aktuator/en (210) zur Luftmengensteuereinrichtung mit unterschiedlichen Arten von Luftmengensteuereinrichtungen (57, 206, 206') mechanisch koppelbar ist/sind.

11. Belüftungsvorrichtung nach zumindest einem der vorangehenden Ansprüche, **dadurch gekennzeichnet, dass** ein Schrittmotor als Aktuator (210, 212) zur Verstellung der Luftmengensteuereinrichtung (57, 206, 206') und/oder zur Verstellung der Luftrichtungssteuerung (55, 56, 205, 205') verwendet wird.

12. Belüftungsvorrichtung nach zumindest einem der vorangehenden Ansprüche, **dadurch gekennzeichnet, dass** die Luftrichtungssteuereinrichtung (55, 56, 105, 105') und/oder die Luftmengensteuereinrichtung (57, 206, 206') durch zumindest einen elektrischen Antrieb (61) betätigbar ist.

13. Belüftungsvorrichtung nach zumindest einem der vorangehenden Ansprüche, **dadurch gekennzeichnet, dass** die Multifunktionsbaugruppe (207) mindestens eine einfache und/oder universelle mechanische Schnittstelle (103, 225) zwischen dem elektrischen Antrieb (61), bzw. dem/den Aktuator/en (212) für die Luftrichtungssteuerung und der Luftrichtungssteuereinrichtung (55, 56, 205, 205') aufweist.

14. Belüftungsvorrichtung nach Anspruch 13, **dadurch gekennzeichnet, dass** die mechanische Schnittstelle (103, 225) aus dem Zahneingriff von zumindest zwei Kron-, Kegel-, Stirn- oder Hohlrädern des elektrischen Antriebs (61), bzw. des/der Aktuators/en (210, 212), mit entsprechenden Gegenrädern oder Zahnstangen der Luftrichtungssteuereinrichtung (55, 56, 205, 205') bzw. Luftmengensteuereinrichtung (57, 206, 206') besteht.

15. Belüftungsvorrichtung nach Anspruch 13 oder 14, **dadurch gekennzeichnet, dass** der antriebsseitige Teil der mechanischen Schnittstelle (103, 225) aus kaskadenartig angeordneten Ritzeln (25', 25", 80, 81, 82) besteht.

16. Belüftungsvorrichtung nach Anspruch 13, 14 oder 15, **dadurch gekennzeichnet, dass** die mechanische Schnittstelle (103, 225) eine Schnappverbindung aufweist.

17. Belüftungsvorrichtung nach zumindest einem der vorangehenden Ansprüche, **dadurch gekennzeichnet, dass** die Multifunktionsbaugruppe (207) als Kanalabschnitt in einem der Luftströmungskanäle (53, 203) eines Kraftfahrzeugs zwischen einer Heizungs-, Lüftungs-, und/oder Klimaanlage (52, 202) und zumindest einem der Luftausströmer (54, 204) montierbar ist.

18. Belüftungsvorrichtung nach zumindest einem der vorangehenden Ansprüche, **dadurch gekennzeichnet, dass** sich der elektrische Antrieb (61) bzw. mindestens einer der Aktuatoren (210, 212) zur Luftrichtungssteuerung bzw. der Luftmengensteuerung außerhalb eines Luftstromes der Belüftungsvorrichtung (51, 201) befindet.

19. Belüftungsvorrichtung nach zumindest einem der vorangehenden Ansprüche, **dadurch gekennzeichnet, dass** mindestens zwei Aktuatoren (210, 212) unabhängig davon, welche Aufgabe sie erfüllen, zu einem gemeinsamen Modul, insbesondere in Form eines Mehrwellenmotors (1), zusammengefasst sind.

20. Belüftungsvorrichtung nach Anspruch 19, **dadurch gekennzeichnet, dass** der Mehrwellenmotor (1) zum Antrieb der Luftrichtungssteuereinrichtung (55, 56, 205, 205') oder zum Antrieb der Luftmengensteuereinrichtung (57, 206, 206') und der Luftrichtungssteuereinrichtung (55, 56, 205, 205') vorgesehen ist.

21. Belüftungsvorrichtung nach Anspruch 20, **dadurch gekennzeichnet, dass** der Mehrwellenmotor (1) zumindest zwei, insbesondere drei, Permanentmagnetrotoren (3) und zumindest zwei bewickelte Statorteile (6, 6') aufweist.

22. Belüftungsvorrichtung nach Anspruch 20 oder 21, **dadurch gekennzeichnet, dass** Drehachsen (4) der Permanentmagnetrotoren (3) parallel zueinander und die Permanentmagnetrotoren (3) mit den Statorteilen (6, 6') in einer Ebene angeordnet sind, wobei die Drehachsen (4) rechtwinklig zu dieser Ebene ausgerichtet sind.

23. Belüftungsvorrichtung nach Anspruch 21 oder 22, **dadurch gekennzeichnet, dass** die Drehachse (4) zumindest eines Permanentmagnetrotors (3) im wesentlichen rechtwinklig zu den Drehachsen (4) der übrigen Permanentmagnetrotoren (3) angeordnet ist.

24. Belüftungsvorrichtung nach Anspruch 21 oder 22, **dadurch gekennzeichnet, dass** die Drehachsen (4) der Permanentmagnetrotoren (3) koaxial zueinander sind.

25. Belüftungsvorrichtung nach zumindest einem der vorangehenden Ansprüche, **dadurch gekennzeichnet, dass** zumindest einem Permanentmagnetrotor (3) des Mehrwellenmotors (1), des elektrischen Antriebs (61) bzw. eines Aktuatormoduls (210, 212) ein Untersetzungsgetriebe (40a, 40b) zugeordnet ist, insbesondere ein nichtselbsthemmendes Untersetzungsgetriebe in Form zumindest einer Stimrad- oder Planetengetriebestufe.

26. Belüftungsvorrichtung nach zumindest einem der vorangehenden Ansprüche, **dadurch gekennzeichnet, dass** die einzelnen Elektromotoren bzw. der Mehrwellenmotor (1) in einem Gehäuse (17) oder auf einem Träger als Baugruppe zusammengefasst sind/ist, insbesondere in Form eines Antriebsmoduls.

27. Belüftungsvorrichtung nach Anspruch 24, 25 oder 26, **dadurch gekennzeichnet, dass** zumindest ein Teil des Untersetzungsgetriebes (40a, 40b) in dem Gehäuse (17) bzw. auf dem Träger angeordnet ist.

28. Belüftungsvorrichtung nach zumindest einem der vorangehenden Ansprüche, **dadurch gekennzeichnet, dass** der elektrische Antrieb (61) auf zumindest einer oder zwei aufeinanderfolgende Seitenfläche/n eines Luftströmungskanals (53, 203) montiert ist, wobei dieser einen im wesentlichen rechteckigen Querschnitt aufweist.

29. Belüftungsvorrichtung nach zumindest einem der vorangehenden Ansprüche, **dadurch gekennzeichnet, dass** zumindest eine Drehachse des elektrischen Antriebs (61) parallel zur Luftströmungsrichtung verläuft.

30. Belüftungsvorrichtung nach zumindest einem der vorangehenden Ansprüche, **dadurch gekennzeichnet, dass** der elektrische Antrieb (61) innerhalb oder außerhalb des Luftströmungskanals (53, 203) an dessen Wandung angeordnet ist.

31. Belüftungsvorrichtung nach zumindest einem der vorangehenden Ansprüche, **dadurch gekennzeichnet, dass** der elektrische Antrieb (61) innerhalb des Luftströmungskanals (53, 203) angeordnet ist und allseitig luftumströmbar ist.

32. Belüftungsvorrichtung nach zumindest einem der vorangehenden Ansprüche, **dadurch gekennzeichnet, dass** der elektrische Antrieb (61) und/oder der Lüfter (62) über Streben (71) zentral im Luftführungskanal (53, 203) gehalten sind/ist.

33. Belüftungsvorrichtung nach zumindest einem der vorangehenden Ansprüche, **dadurch gekennzeichnet, dass** der elektrische Antrieb (61), insbesondere das Ende einer seiner Antriebswellen (21), in einer zentralen Achse (65) der Luftrichtungssteuereinrichtung (55, 56, 205, 205') gelagert ist.

34. Belüftungsvorrichtung nach Anspruch 33, **dadurch gekennzeichnet, dass** ein mit einer Verzahnung (105) versehenes Schieberohr (104) um die zentrale Achse (65) verschiebbar gelagert ist, wobei das Schieberohr (104) Mitnehmer. (106) für Luftführungsscheiben (67) und/oder Luftführungslamellen (66) aufweist.

35. Belüftungsvorrichtung nach zumindest einem der vorangehenden Ansprüche, **dadurch gekennzeichnet, dass** zumindest eine Drehachse des elektrischen Antriebs (61) rechtwinklig zur Strömungsrichtung und rechtwinklig zur Luftrichtungssteuereinrichtung (rechts/links) (56, 205') angeordnet ist.

36. Belüftungsvorrichtung nach zumindest einem der vorangehenden Ansprüche, **dadurch gekennzeichnet, dass** die Drehachse des elektrischen Antriebs (61) mit der Drehachse der Luftrichtungssteuereinrichtung (auf/ab) (55, 205) übereinstimmt.

37. Belüftungsvorrichtung nach zumindest einem der vorangehenden Ansprüche, **dadurch gekennzeichnet, dass** die Multifunktionsbaugruppe (207) zusätzlich ein Elektronikmodul (213) enthält, insbesondere zur Ansteuerung zumindest eines der in Anspruch 1 genannten Vorrichtungen und/oder Aktuatoren.

38. Belüftungsvorrichtung nach zumindest einem der vorangehenden Ansprüche, **dadurch gekennzeichnet, dass** das Elektronikmodul (213) die Schnittstelle für Information und Energie zwischen den einzelnen Komponenten der Multifunktionsbaugruppe (207) und dem übrigen Fahrzeug, insbesondere Bedieneinheit und Bordcomputer, darstellt.

39. Belüftungsvorrichtung nach zumindest einem der vorangehenden Ansprüche, **dadurch gekennzeichnet, dass** die Multifunktionsbaugruppe (207) zusätzlich zumindest ein Element zur Erzeugung von Licht (227) und/oder ein Weiterleitungsmittel (228) für Licht, insbesondere zur Beleuchtung von Bedienelementen (209) oder für Anzeigefunktionen, enthält.

40. Belüftungsvorrichtung nach zumindest einem der vorangehenden Ansprüche, **dadurch gekennzeichnet, dass** die Multifunktionsbaugruppe (207) zusätzlich zumindest ein Weiterleitungsmittel für Informationen (229), vorzugsweise einen Datenbus, und/oder ein Weiterleitungsmittel für Energie (226) aufweist.

41. Belüftungsvorrichtung nach zumindest einem der vorangehenden Ansprüche, **dadurch gekennzeichnet, dass** mindestens eine der in Anspruch 1 genannten Vorrichtungen und/oder Aktuatoren und/oder das Elektronikmodul (213) eine elektronische Busansteuerung aufweist.

42. Belüftungsvorrichtung nach zumindest einem der vorangehenden Ansprüche, **dadurch gekennzeichnet, dass** mindestens eine der in Anspruch 1 genannten Vorrichtungen und/oder Aktuatoren und/oder das Elektronikmodul (213) eine Versorgung auf Basis einer erhöhten Bordnetzspannung aufweist, insbesondere 42V.

## Claims

1. A ventilation device (51, 201) for vehicles with a multiple-function sub-assembly (207), of which the visual design of all the components visible in the interior of the vehicle is independent, in particular in conjunction with a heating unit or air-conditioning unit (52, 202), with air-flow ducts (53, 203) and at least one air outlet (54, 204) with at least one air-direction control device (55, 56, 205, 205') and/or one air-volume control device (57, 206, 206'), **characterized in that** the multiple-function sub-assembly (207) comprises at least one actuator (212) for adjusting the air-direction control device (55, 56, 205, 205') and/or one actuator (210) for adjusting the air-volume control device (57, 206, 206') and/or one heating device (208, 208') and/or one ventilator device (62, 211), the multiple-function sub-assembly (207) is capable of being used in a general-purpose manner, in particular for different air outlets (54, 204) at least inside one vehicle as well as inside different vehicles, and the multiple-function sub-assembly (207) is decentralized.

2. A ventilation device according to Claim 1, **characterized in that** the air-volume control device (57, 206, 206') and/or the air-direction control device (55, 56, 205, 205') is or are a component or components of the multiple-function sub-assembly (207).

3. A ventilation device according to at least one of the preceding Claims, **characterized in that** the body is modular, wherein in particular at least one actuator (212) for adjusting the air-direction control device (55, 56, 205, 205') constitutes an actuator module (224) for the air-direction control and/or the actuator (210) for adjusting the air-volume control device (57, 106, 106') constitutes an actuator module (222) for the air-volume control and/or the air-volume control device (57, 206, 206') constitutes an air-volume control module (218) and/or the heating device (208, 208') constitutes a heating module (58, 220) and/or the ventilator device (59, 211) constitutes a ventilator module (223).

4. A ventilation device according to at least one of the preceding Claims, **characterized in that** the heating device (208, 208') and the air-volume control device (57, 206, 206') constitute a common heating and air-volume control module (221).

5. A ventilation device according to at least one of the preceding Claims, **characterized in that** the heating device (208, 208') comprises at least one heating element which is integrated in the device for the air-volume control (57, 206, 206', 218), in particular in an air-volume control flap.

6. A ventilation device according to at least one of the preceding Claims, **characterized in that** the air-volume control device (57, 206, 206') is constructed in the form of a flap (214) mounted on one side, [in the form of] a flap (215) mounted substantially centrally, [in the form of] a blind-type shutter (216), [in the form of] a visor-type flap (217) or from two visors (97) in the form of cylindrical annular segments capable of being operated in an opposed manner.

7. A ventilation device according to at least one of the preceding Claims, **characterized in that** the heating device (208, 208') can be used as the main heater or an additional heater, wherein at least one heating element is arranged in the air flow in a rigid or a movable manner.

8. A ventilation device according to at least one of the preceding Claims, **characterized in that** the ventilator device (59, 211) can be used as the main ventilator or an additional ventilator and comprises an axial or a radial fan.

9. A ventilation device according to at least one of the preceding Claims, **characterized in that** at least one actuator (212) for the air-direction control is arranged in the leeward side of an axial-fan drive motor.

10. A ventilation device according to at least one of the preceding Claims, **characterized in that** the actuator or actuators (210) for the air-volume control device is or are capable of being coupled mechanically to different types of air-volume control devices (57, 206, 206').

11. A ventilation device according to at least one of the preceding Claims, **characterized in that** a stepping motor is used as the actuator (210, 212) for adjusting the air-volume control device (57, 206, 206') and/or for adjusting the air-direction control device (55, 56, 205, 205').

12. A ventilation device according to at least one of the preceding Claims, **characterized in that** the air-direction control device (55, 56, 105, 105') and/or the air-volume control device (57, 206, 206') is capable of being actuated by at least one electrical drive (61).

13. A ventilation device according to at least one of the preceding Claims, **characterized in that** the multiple-function sub-assembly (207) comprises at least one simple and/or general-purpose mechanical interface (103, 225) between the electrical drive (61) or the actuator or actuators (212) respectively for the air-direction control and the air-direction control device (55, 56, 205, 205').

14. A ventilation device according to Claim 13, **characterized in that** the mechanical interface (103, 225) comprises the tooth engagement of at least two crown, bevel, spur or annular gears of the electrical drive (61) or of the actuator or actuators (210, 212) respectively, with corresponding mating gears or toothed racks of the air-direction control device (55, 56, 205, 205') and the air-volume control device (57, 206, 206') respectively.

15. A ventilation device according to Claim 13 or 14, **characterized in that** the part of the mechanical interface (103, 225) towards the drive comprises pinions (25', 25", 80, 81, 82) arranged in the manner of a cascade.

16. A ventilation device according to Claim 13, 14 or 15, **characterized in that** the mechanical interface (103, 225) comprises a snap-on connexion.

17. A ventilation device according to at least one of the preceding Claims, **characterized in that** the multiple-function sub-assembly (207) is capable of being assembled as a duct portion in one of the air-flow ducts (53, 203) of a motor vehicle between a heating unit, a ventilating unit and/or an air-conditioning unit (52, 202) and at least one of the air outlets (54, 204).

18. A ventilation device according to at least one of the preceding Claims, **characterized in that** the electrical drive (61) or at least one of the actuators (210, 212) for the air-direction control or the air-volume control respectively is situated outside an air flow of the ventilation device (51, 201).

19. A ventilation device according to at least one of the preceding Claims, **characterized in that** at least two actuators (210, 212) are combined - irrespectively of which task they perform - to form a common module, in particular in the form of a multiple-shaft motor (1).

20. A ventilation device according to Claim 19, **characterized in that** the multiple-shaft motor (1) is provided for driving the air-direction control device (55, 56, 205, 205') or for driving the air-volume control device (57, 206, 206') and the air-direction control device (55, 56, 205, 205').

21. A ventilation device according to Claim 20, **characterized in that** the multiple-shaft motor (1) comprises at least two, and in particular three, permanent-magnet rotors (3) and at least two coiled stator parts (6, 6').

22. A ventilation device according to Claim 20 or 21, **characterized in that** axes of rotation (4) of the permanent-magnet rotors (3) are arranged parallel to one another and the permanent-magnet rotors (3) are arranged in one plane with the stator parts (6, 6'), wherein the axes of rotation (4) are orientated at right angles to the said plane.

23. A ventilation device according to Claim 21 or 22, **characterized in that** the axis of rotation (4) of at least one permanent-magnet rotor (3) is arranged substantially at right angles to the axes of rotation (4) of the other permanent-magnet rotors (3).

24. A ventilation device according to Claim 21 or 22, **characterized in that** the axes of rotation (4) of the permanent-magnet rotors (3) are arranged coaxially with one another.

25. A ventilation device according to at least one of the preceding Claims, **characterized in that** a reduction gearing (40a, 40b), in particular a non-self-locking reduction gearing in the form of at least one spur-gear or planetary-gear stage, is associated with at least one permanent-magnet rotor (3) of the multiple-shaft motor (1), of the electrical drive (61) or of an actuator module (210, 212) respectively.

26. A ventilation device according to at least one of the preceding Claims, **characterized in that** the individual electric motors or the multiple-shaft motor (1) is or are combined in a housing (17) or on a support to form a sub-assembly, in particular in the form of a drive module.

27. A ventilation device according to Claim 24, 25 or 26, **characterized in that** at least part of the reduction gearing (40a, 40b) is arranged in the housing (17) or on the support respectively.

28. A ventilation device according to at least one of the preceding Claims, **characterized in that** the electrical drive (61) is mounted on at least one or two successive lateral faces of an air-flow duct (53, 203), wherein the said air-flow duct (53, 203) has a substantially rectangular cross-section.

29. A ventilation device according to at least one of the preceding Claims, **characterized in that** at least one axis of rotation of the electrical drive (61) extends parallel to the air-flow direction.

30. A ventilation device according to at least one of the preceding Claims, **characterized in that** the electrical drive (61) is arranged inside or outside the air-flow duct (53, 203) on the wall of the latter.

31. A ventilation device according to at least one of the preceding Claims, **characterized in that** the electrical drive (61) is arranged inside the air-flow duct (53, 203) and is capable of having the air flowing around it on all sides.

32. A ventilation device according to at least one of the preceding Claims, **characterized in that** the electrical drive (61) and/or the fan (62) is or are held centrally in the air-flow duct (53, 203) by way of braces (71).

33. A ventilation device according to at least one of the preceding Claims, **characterized in that** the electrical drive (61), in particular the end of one of its drive shafts (21), is mounted in a central axle (65) of the air-direction control device (55, 56, 205, 205').

34. A ventilation device according to Claim 33, **characterized in that** a sliding tube (104) provided with a set of teeth (105) is mounted so as to be displaceable about the central axle (65), wherein the sliding tube (104) comprises entrainment means (106) for air-guide discs (67) and/or air-guide plates (66).

35. A ventilation device according to at least one of the preceding Claims, **characterized in that** at least one axis of rotation of the electrical drive (61) is arranged at a right angle to the direction of flow and at a right angle to the air-direction control device (right / left) (56,205').

36. A ventilation device according to at least one of the preceding Claims, **characterized in that** the axis of rotation of the electrical drive (61) coincides with the axis of rotation of the air-direction control device (on / off) (55, 205').

37. A ventilation device according to at least one of the preceding Claims, **characterized in that** the multiple-function sub-assembly (207) additionally contains an electronic module (213), in particular for actuating at least one of the devices and/or actuators named in Claim 1.

38. A ventilation device according to at least one of the preceding Claims, **characterized in that** the electronic module (213) constitutes the interface for information and energy between the individual components of the multiple-function sub-assembly (207) and the rest of the vehicle, in particular an operating unit and an on-board computer.

39. A ventilation device according to at least one of the preceding Claims, **characterized in that** the multiple-function sub-assembly (207) additionally contains at least one element for the generation of light (227) and/or a transmission means (228) for the light, in particular for illuminating operating elements (209) or for display functions.

40. A ventilation device according to at least one of the preceding Claims, **characterized in that** the multiple-function sub-assembly (207) additionally comprises at least one transmission element for information (229), preferably a data bus, and/or a transmission means for energy (226).

41. A ventilation device according to at least one of the preceding Claims, **characterized in that** at least one of the devices and/or actuators named in Claim 1 and/or the electronic module (213) has an electronic bus control.

42. A ventilation device according to at least one of the preceding Claims, **characterized in that** at least one of the devices and/or actuators named in Claim 1 and/or the electronic module (213) has a supply on the basis of an increased on-board supply voltage, in particular 42 V.

## Revendications

1. Dispositif d'aération (51,201) pour des véhicules comportant un module multifonction (207), dont est indépendant l'agencement optique de tous les composants visibles dans l'habitacle du véhicule, notamment en liaison avec une installation de chauffage ou de climatisation (52, 202), comportant des canaux d'écoulement d'air (53, 203) et au moins un dispositif d'éjection d'air (54,220) comportant au moins un dispositif (55, 56, 205, 205') de commande de la direction de l'air et/ou un dispositif (57, 206, 206') de commande de la quantité d'air, **caractérisé en ce que** le module multifonction (207) est constitué par un actionneur (212) servant à régler le dispositif (55, 56, 205, 205') de commande de la direction de l'air et/ou un actionneur (210) pour régler le dispositif (57, 206, 206') de commande de la quantité d'air et/ou un dispositif d'activation (208, 208') et/ou un dispositif de ventilateur (62, 211), que le module multifonction (207) peut être utilisé de façon universelle, notamment pour des dispositifs différents d'éjection d'air (54, 204) au moins à l'intérieur d'un véhicule ainsi que de différents véhicules et que le module multifonction (207) est décentralisé.

2. Dispositif d'aération selon la revendication 1, **caractérisé en ce que** le dispositif (57, 206, 206') de commande de la quantité d'air et/ou le dispositif (55, 56, 205, 205') de commande de la direction de l'air fait/font partie du module multifonction (207).

3. Dispositif d'aération selon au moins l'une des revendications précédentes, **caractérisé en ce que** l'agencement est modulaire, auquel cas notamment au moins un actionneur (212) servant à régler le dispositif (55, 56, 205, 205') de commande de la direction de l'air constitue un module d'actionneur (224) pour la commande de la direction de l'air et/ou l'actionneur (210) pour le réglage du dispositif (57, 206, 206') de commande de la quantité d'air un module d'actionneur (222) pour la commande de la quantité d'air et/ou le dispositif (57, 206, 206') de commande de la quantité d'air constitue un module (218) de commande de la quantité d'air et/ou le dispositif de chauffage (208, 208') constitue un module de chauffage (58, 220) et/ou le dispositif de ventilateur (59, 211) constitue un module de ventilateur (223).

4. Dispositif d'aération selon au moins l'une des revendications précédentes, **caractérisé en ce que** le dispositif de chauffage (208, 208') et le dispositif (57, 206, 206') de commande la quantité d'air constitue un module (221) de commande du chauffage et de la quantité d'air.

5. Dispositif d'aération selon au moins l'une des revendications précédentes, **caractérisé en ce que** le dispositif de chauffage (208, 208') comporte au moins un élément chauffant, qui est intégré dans le dispositif (57, 206, 206', 218) de commande de la quantité d'air, notamment dans un clapet de commande de la quantité d'air.

6. Dispositif d'aération selon au moins l'une des revendications précédentes, **caractérisé en ce que** le dispositif (57, 206, 206') de commande de la quantité d'air est agencé sous la forme d'un clapet (214) notamment tourillonné d'un côté, d'un clapet (215) tourillonné approximativement de façon centrée, un clapet à jalousie (216), un clapet collimateur (217) ou par deux collimateurs (97) en forme de segments d'anneaux cylindriques pouvant être entraînés en des sens opposés.

7. Dispositif d'aération selon au moins l'une des revendications précédentes, **caractérisé en ce que** le dispositif de chauffage (208, 208') peut être utilisé en tant que dispositif de chauffage principal supplémentaire, au moins un élément chauffant étant disposé d'une manière rigide ou mobile dans l'écoulement d'air.

8. Dispositif d'aération selon au moins l'une des revendications précédentes, **caractérisé en ce que** le dispositif de ventilateur (59, 211) peut être utilisé en tant que dispositif d'aération principal ou supplémentaire est constitué par un ventilateur axial ou radial.

9. Dispositif d'aération selon au moins l'une des revendications précédentes, **caractérisé en ce que** qu'au moins un actionneur (212) pour la commande de la direction de l'air est disposé sur le côté abrité d'un moteur d'entraînement du ventilateur axial.

10. Dispositif d'aération selon au moins l'une des revendications précédentes, **caractérisé en ce que** le/les actionneur(s) (210) pour le dispositif de commande de la quantité d'air peut/peuvent être couplé(s) mécaniquement aux types les plus divers de dispositifs (57, 206, 206') de commande de la quantité d'air.

11. Dispositif d'aération selon au moins l'une des revendications précédentes, **caractérisé en ce qu'**on utilise un moteur pas-à-pas comme actionneur (210, 212) pour régler le dispositif (57, 206, 206') de commande de la quantité d'air et/ou pour le réglage de la commande (55,56,205, 205') de la direction de l'air.

12. Dispositif d'aération selon au moins l'une des revendications précédentes, **caractérisé en ce que** le dispositif (55, 56, 105, 105') de commande de la direction de l'air et/ou le dispositif (57, 206, 206') de commande de la quantité d'air peuvent être actionnés par au moins un dispositif d'entraînement électrique (61).

13. Dispositif d'aération selon au moins l'une des revendications précédentes, **caractérisé en ce que** le module multifonction (207) comporte au moins une interface mécanique simple et/ou universelle (103, 225) entre le dispositif d'entraînement électrique (61) ou le/les actionneur(s) (212) pour la commande de la direction de l'air et le dispositif (55, 56, 205, 205') de commande de la direction de l'air.

14. Dispositif d'aération selon la revendication 13, **caractérisé en ce que** l'interface mécanique (103, 225) est constituée par l'engrènement des dents d'au moins deux couronnes dentées, deux pignons coniques, deux pignons droits ou deux pignons creux du dispositif d'entraînement électrique (61) ou du/des actionneurs(s) (210, 212) avec des pignons antagonistes correspondants ou des crémaillères correspondantes du dispositif (55, 56, 205, 205') du dispositif de commande de la direction de l'air ou du dispositif (57, 206, 206') de commande de la quantité d'air.

15. Dispositif d'aération selon la revendication 13 ou 14, **caractérisé en ce que** la partie côté entraîné de l'interface mécanique (103, 225) est constituée par des pignons (25', 25", 80, 81, 82) disposés en cascade.

16. Dispositif d'aération selon la revendication 13, 14 ou 15, **caractérisé en ce que** l'interface mécanique (103, 225) comporte une liaison à encliquetage.

17. Dispositif d'aération selon au moins l'une des revendications précédentes, **caractérisé en ce que** le module multifonction (207) peut être monté en tant que section de canal dans l'un des canaux d'écoulement (53, 203) d'un véhicule automobile entre une installation de chauffage, une installation d'aération et/ou une installation de climatisation (52, 202) et au moins l'un des dispositifs d'éjection d'air (54, 204).

18. Dispositif d'aération selon au moins l'une des revendications précédentes, **caractérisé en ce que** le dispositif d'entraînement électrique (61) ou au moins l'un des actionneurs (210, 212) pour la commande de la direction de l'air ou la commande de la quantité d'air est situé à l'extérieur d'un écoulement d'air du dispositif d'aération (51, 201).

19. Dispositif d'aération selon au moins l'une des revendications précédentes, **caractérisé en ce qu'**au moins deux actionneurs (210, 212) sont réunis pour former un module commande, notamment sous la forme d'un moteur (1) à plusieurs arbres, indépendamment des tâches que ces actionneurs exécutent.

20. Dispositif d'aération selon la revendication 19, **caractérisé en ce que** le moteur (1) à arbres multiples est prévu pour l'entraînement du dispositif (55, 56, 205, 205') de commande de la direction de l'air ou pour l'entraînement du dispositif (57, 206, 206') de commande de la quantité d'air et du dispositif (55, 56, 205, 205') de commande de la direction de l'air.

21. Dispositif d'aération selon la revendication 20, **caractérisé en ce que** le moteur (1) à arbres multiples comporte au moins deux, notamment trois, rotors (3) à aimants permanents et au moins deux parties de stator bobinées (6, 6').

22. Dispositif d'aération selon la revendication 20 ou 21, **caractérisé en ce que** les axes de rotation (4) des rotors (3) à aimants permanents sont parallèles entre eux et les rotors (3) à aimants permanents sont disposés avec les parties de stator (6, 6') dans un plan, les axes de rotation (4) étant orientés perpendiculairement à ce plan.

23. Dispositif d'aération selon la revendication 21 ou 22, **caractérisé en ce qu'**un rotor (3) à aimants permanents est dispose essentiellement perpendiculairement aux axe de rotation (4) des autres rotors (3) à aimants permanents.

24. Dispositif d'aération selon la revendication 21 ou 22, **caractérisé en ce que** les axes de rotation (4) des rotors (3) à aimants permanents sont coaxiaux entre eux.

25. Dispositif d'aération selon au moins l'une des revendications précédentes, **caractérisé en ce qu'**au moins à un rotor (3) à aimants permanents du rotor (1) à arbres multiples, du dispositif d'entraînement électrique (61) ou d'un module d'actionneur (210, 212) est associée une transmission démultiplicatrice (40a, 40b), notamment une transmission démultiplicatrice, non autobloquante agencée sous la forme d'au moins un étage d'engrenages à pignons droits ou un étage d'engrenage planétaire.

26. Dispositif d'aération selon au moins l'une des revendications précédentes, **caractérisé en ce que** les différents moteurs électriques ou le moteur (1) à arbres multiples sont/est réuni(s) dans un boîtier (17) ou sur un support sous la forme d'un module, notamment sous la forme d'un module d'entraînement.

27. Dispositif d'aération selon la revendication 24, 25 ou 26, **caractérisé en ce qu'**au moins une partie de la transmission démultiplicatrice (40a, 40b) est disposé dans un boîtier (17) ou sur le support.

28. Dispositif d'aération selon au moins l'une des revendications précédentes, **caractérisé en ce que** le dispositif d'entraînement électrique (61) est monté sur au moins une ou deux surfaces latérales successives d'un canal d'écoulement (53, 203), ce dernier possédant une section transversale essentiellement rectangulaire.

29. Dispositif d'aération selon au moins l'une des revendications précédentes, **caractérisé en ce qu'**un axe de rotation du dispositif d'entraînement électrique (61) s'étend parallèlement à la direction d'écoulement de l'air.

30. Dispositif d'aération selon au moins l'une des revendications précédentes, **caractérisé en ce que** le dispositif d'entraînement électrique (61) est disposé à l'intérieur ou à l'extérieur du canal de circulation synchrone (53, 203), sur la paroi de ce canal.

31. Dispositif d'aération selon au moins l'une des revendications précédentes, **caractérisé en ce que** le dispositif d'entraînement électrique (61) est disposé à l'intérieur du canal de circulation d'air (53, 203) et que l'air peut circuler de tous côtés autour de ce dispositif d'entraînement électrique.

32. Dispositif d'aération selon au moins l'une des revendications précédentes, **caractérisé en ce que** le dispositif d'entraînement électrique (61) et/ou le ventilateur (62) est/sont retenu(s) d'une manière centrale, au moyen d'entretoises (71), dans le canal (53, 203) de guidage de l'air.

33. Dispositif d'aération selon au moins l'une des revendications précédentes, **caractérisé en ce que** le dispositif d'entraînement électrique (61), notamment l'extrémité de l'un de ses arbres d'entraînement (21), est montée dans un axe central (65) du dispositif (55, 56, 205, 205') de commande de direction de l'air.

34. Dispositif d'aération selon la revendication 33, **caractérisé en ce qu'**un tube de poussée (104) équipé d'une denture (105) est monté de manière à être déplaçable autour de l'axe central (65), le tube de poussée (104) comportant un organe d'entraînement (106) pour des disques (67) de guidage de l'air et/ou des lamelles (66) de guidage de l'air.

35. Dispositif d'aération selon au moins l'une des revendications précédentes, **caractérisé en ce qu'**au moins un axe de rotation du dispositif d'entraînement électrique (61) est disposé perpendiculairement à la direction de circulation et perpendiculairement au dispositif (56, 205') de commande de la direction de l'air (droite/gauche).

36. Dispositif d'aération selon au moins l'une des revendications précédentes, **caractérisé en ce que** l'axe de rotation du dispositif d'entraînement électrique (61) coïncide ave l'axe de rotation du dispositif (55, 205) de commande de la direction de l'air (montante/descendante).

37. Dispositif d'aération selon au moins l'une des revendications précédentes, **caractérisé en ce que** le module multifonction (207) contient en outre un module électronique (213), notamment pour la commande d'au moins l'un des dispositifs et/ou actionneurs indiqués dans la revendication 1.

38. Dispositif d'aération selon au moins l'une des revendications précédentes, **caractérisé en ce que** le module électronique (213) représente l'interface pour le transfert d'informations et d'une énergie entre les différents composants du module multifonction (207) et le reste du véhicule, notamment l'unité de commande et l'ordinateur de bord.

39. Dispositif d'aération selon au moins l'une des revendications précédentes, **caractérisé en ce que** le module multifonction (207) contient en outre au moins un élément pour produire une lumière (227) et/ou un moyen (228) de transmission de la lumière, notamment pour l'éclairage d'éléments de commande (209) ou pour des fonctions d'affichage.

40. Dispositif d'aération selon au moins l'une des revendications précédentes, **caractérisé en ce que** le module multifonction (207) comporte en supplément au moins un moyen de transmission d'informations (229), de préférence un bus de transmission de données, et/ou un moyen de transmission d'énergie (226).

41. Dispositif d'aération selon au moins l'une des revendications précédentes, **caractérisé en ce qu'**au moins l'un des dispositifs et/ou actionneurs, indiqués dans la revendication 1, et/ou le module électronique (213) comportent une unité de commande électronique de bus.

42. Dispositif d'aération selon au moins l'une des revendications précédentes, **caractérisé en ce qu'**au moins l'un des dispositifs et/ou actionneurs, indiqués dans la revendication 1, et/ou le module électronique (213) possèdent une alimentation sur la base d'une tension du réseau de bord accrue, notamment 42 V.
